(19) Europäisches Patentamt
European Patent Office
Office européen des brevets

(11) EP 3 222 682 B1

(12) EUROPEAN PATENT SPECIFICATION

(45) Date of publication and mention of the grant of the patent:
**11.09.2019 Bulletin 2019/37**

(21) Application number: **15860607.9**

(22) Date of filing: **17.11.2015**

(51) Int Cl.:
***C09D 4/02*** (2006.01) ***B32B 27/30*** (2006.01)
***C09D 5/16*** (2006.01) ***C09D 7/63*** (2018.01)
***C09D 4/00*** (2006.01) ***C08K 5/00*** (2006.01)

(86) International application number:
**PCT/JP2015/082257**

(87) International publication number:
**WO 2016/080391 (26.05.2016 Gazette 2016/21)**

(54) **TWO-PART ANTI-FOULING PAINT COMPOSITION, ANTI-FOULING PAINT FILM, ANTI-FOULING BASE MEMBER, AND METHOD FOR MANUFACTURING ANTI-FOULING BASE MEMBER**

ZWEITEILIGE BEWUCHSHEMMENDE FARBZUSAMMENSETZUNG, BEWUCHSHEMMENDE FARBSCHICHT, BEWUCHSHEMMENDER GRUNDKÖRPER UND VERFAHREN ZUR HERSTELLUNG EINES BEWUCHSHEMMENDEN GRUNDKÖRPERS

COMPOSITION DE PEINTURE ANTISALISSURE À DEUX PARTIES, ÉLÉMENT DE BASE ANTISALISSURE ET PROCÉDÉ DE FABRICATION DUDIT ÉLÉMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2014 JP 2014233902**

(43) Date of publication of application:
**27.09.2017 Bulletin 2017/39**

(73) Proprietor: **CHUGOKU MARINE PAINTS, LTD.**
**Otake-shi**
**Hiroshima 739-0652 (JP)**

(72) Inventor: **NIIMOTO, Jyunji**
**Otake-shi**
**Hiroshima 739-0652 (JP)**

(74) Representative: **Hoffmann Eitle**
**Patent- und Rechtsanwälte PartmbB**
**Arabellastraße 30**
**81925 München (DE)**

(56) References cited:
**WO-A1-2007/074656**
**WO-A1-2010/108985**
**WO-A1-2013/073580**
**GB-A- 1 303 179**
**JP-A- 2000 129 073**
**JP-A- 2010 235 792**
**JP-A- 2014 148 639**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a two-component antifouling coating composition, an antifouling coating film composed of the antifouling coating composition, an antifouling substrate and a method for producing the antifouling substrate.

### Background Art

In ships, underwater structures, fishing nets, etc., various aquatic organisms, e.g., animals suchas oysters, mussels and barnacles, plants such as lavers, and bacteria, are liable to adhere to surfaces of substrates exposed to water for a long period of time. If these aquatic organisms propagate on a substrate surface, the surface roughness of a ship is increased to cause lowering of velocity and increase of fuel cost, or an anti-corrosive coating film having been applied to the substrate surface is damaged to give a fear of damages such as decrease in strength or function of an underwater structure and marked shortening of the life thereof. If the aquatic organisms adhere to a fishing net such as culture net or fixed net and propagate thereon, a serious problem attributable to blockage of meshes of the net, e.g., death of captured fish attributable to oxygen deficiency, sometimes occurs. If the aquatic organisms adhere to seawater supply and drainage pipes in a thermal power or atomic power plant or the like and propagate thereon, cooling water supply and drainage circulation is sometimes hindered. In order to prevent such adhesion of aquatic organisms, development and studies of various antifouling coatings to be applied to substrate surfaces have been promoted.

In the field of antifouling coatings, further, a decrease in the VOC content in a coating has been required in addition to exhibition of long-lasting antifouling performance (long-term antifouling properties) and reduction of the number of recoating operations, from the viewpoints of the recent revision of Air Pollution Control Act and the environmental problems.

In conventional antifouling coatings, metal (copper or zinc) salt-containing resins having acrylic resin skeleton and hydrolyzable resins such as silicon ester resins having acrylic resin skeleton have been used, but these resins have high viscosity, and therefore, in order to maintain practical drying properties and strength, it is necessary to design them to have a high molecular weight.

Accordingly, to the coating compositions using these resins, organic solvents need to be added in large amounts in order to adjust the coating viscosity to a proper viscosity free from troubles in coating operation, and it is difficult to reduce the content of volatile organic compounds (referred to as "VOC" (Volatile Organic Compounds) hereinafter) in coatings.

Then, use of a novel resin has been desired.

For example, in a patent literature 1, there is a description of a coating material containing a hydrophilic moiety derived from a Michael addition reaction donor and a Michael addition reaction acceptor. In the working example of the patent literature 1, hyperbranched polyester amine acrylate is disclosed. In addition, it is described that with regard to the composition of the patent literature 1, film formation is carried out by a curing method using UV irradiation. In usual ship coating, an UV curing method or a drying method such as ignition drying is not adapted, and drying at the environmental temperature as it is of the coating process is performed, so that the composition that adopts a special drying method is of no practical use. Further, the film is a clear film having a main purpose of medical use, and the composition has low strength because it does not contain a pigment component and an antifoulant component. On that account, the composition does not provide a film having a strength withstanding a water flow around a ship and lacks antifouling ability against marine organisms, so that the composition is of no practical use in development as an antifouling coating for ships.

In a patent literature 2, formulation for forming a coating film by Michael addition reaction is described. A monofunctional acrylic ester and an amine are allowed to react with each other to synthesize an amine curing agent, and the amine curing agent is allowed to further react with an epoxy resin to form a coating film. The acrylic ester used herein is limited to a monofunctional acrylic ester containing a hydrolyzable group (triisopropylsilyl acrylate) . The reason is that if a polyfunctional acrylic ester is used, galation occurs, and an amine curing agent having fluidity cannot be synthesized. The reaction mechanism in the formation of a coating film of this formulation is an epoxy/amine curing system itself, and at an environmental temperature of not higher than 10 °C, the low- temperature curability is poor, and there are problems in the coating film strength and the water resistance.

In a patent literature 3, a coating composition containing (A) an anhydride monofunctional polymer containing at least two or more cyclic carboxylic anhydride groups in a molecule and (B) an amine functional polymer is disclosed, and in the patent literature 3, there is a description of Michal addition reaction. However, there is also a description that an acid anhydride is incorporated into the reaction system, and this composition has poor low-temperature curability at an environmental temperature of not higher than 10 °C and has a reaction mechanism different, in technical viewpoints,

from such a reaction mechanism as that of the present invention in which a polyfunctional acrylic ester and an amine are allowed to directly react with each other to exhibit low-temperature curability and to ensure good coating film properties.

Marine structures such as ships are huge structures, and coating is carried out in the outdoor natural environment, and in the actual state, coatings which exhibit drying properties through ignition drying or UV curing cannot cope with such coating, so that coatings which are dried in the natural environmental temperature range are required.

Citation List

Patent Literature

Patent literature 1: JP-A-2012-521472
Patent literature 2: JP-A-2010-235792
Patent literature 3: JP-A-1992-506537

Summary of Invention

Technical Problem

Polymers obtained by using Michael addition reaction are well known as described above, but in the point that application of an antifouling coating to a marine structure such as a ship is the main purpose and good drying properties are exhibited at a natural environmental temperature particularly in a low-temperature range, what kind of constitution should be adopted has never been known.

Solution to Problem

In order to solve the above problem, studies have been made, and it has been found that the above problem can be solved by a two-component antifouling coating composition which comprises two components of a first component comprising, as an essential component, a tri- or higher functional (meth) acrylic ester (A) in a given amount and a second component comprising an amine (B), and an antifoulant component (C) in either the first component or the second component, wherein although either or both of the (meth)acrylic ester (A) and the amine (B) have an ether structure, the composition forms a film through Michael addition reaction. Thus, the present invention has been accomplished.

[1] A two-component antifouling coating composition, comprising:

a first component comprising a (meth)acrylic ester (A);
a second component comprising an amino group-containing compound (B); and
an antifoulant (C) in either the first component or the second component, wherein
either or both of the (meth)acrylic ester (A) and the amino group-containing compound (B) have an ether structure;
not less than 50% by weight of a tri- or higher functional (meth) acrylic ester is contained in a total weight of the (meth) acrylic ester (A); and
the amino group-containing compound (B) is 20 to 100 parts by weight with respect to 100 parts by weight of the (meth) acrylic ester (A).

[2] The two-component antifouling coating composition according to [1], wherein the antifoulant (C) comprises one or two or more selected from cuprous oxide, a pyrithione metal salt, 4,5-dichloro-2-n-octyl-4-isothiazolin-3-one, 2-methylthio-4-t-butylamino-6-cyclopropylamino-S-triazine, 4-bromo-2-(4-chlorophenyl)-5-(trifluoromethyl)-1H-pyrrole-3-carb onitrile, and medetomidine.
[3] The two-component antifouling coating composition according to [1] or [2], further comprising, as another resin component (D), one or two or more selected from a terpene phenol, a ketone resin, a petroleum resin, a cumarone resin, an epoxy resin, a hydrolyzable resin, and a rosin/rosin derivative compound.
[4] The two-component antifouling coating composition according to any one of [1] to [3], further comprising an extender pigment (E).
[5] The two-component antifouling coating composition according to any one of [1] to [4], further comprising a pigment dispersing agent (F).
[6] The two-component antifouling coating composition according to any one of [1] to [5], further comprising a coloring agent (G).

[7] The two-component antifouling coating composition according to any one of [1] to [6], further comprising a dehydrating agent (H).

[8] The two-component antifouling coating composition according to any one of [1] to [7], further comprising a plasticizer (I).

[9] The two-component antifouling coating composition according to any one of [1] to [8], having a content of volatile organic compounds of 400 g/L or less.

[10] An antifouling coating film, obtained by curing the two-component antifouling coating composition according to any one of [1] to [9].

[11] An antifouling substrate, obtained by: coating or impregnating a substrate with the two-component antifouling coating composition according to any one of [1] to [9]; and then curing the composition.

[12] The antifouling substrate according to [11], wherein the substrate is an underwater structure, a ship, or fishing gear.

[13] A method for producing an antifouling substrate, comprising steps of: coating or impregnating a substrate with the antifouling coating composition according to any one of [1] to [9]; and curing the composition, with which the substrate has been coated or impregnated.

The two-component antifouling coating composition of the present invention has a mechanism that a coating film is formed by Michael addition reaction of an acrylic ester with an amine compound in the coating process. A usual reaction film of an epoxy resin with an amine compound and a reaction product of an acrylic ester with an amine have too high water resistance. Even if an antifoulant component is added, they have no sustained release action of the antifoulant because of too high water resistance, thereby exhibiting no antifouling properties. Then, the present invention is an invention focused on a mechanism such that a coating film, which becomes hydrophilic by introducing an ether component into either or both of an acrylic ester and an amine, is formed and by virtue of its hydrophilic action, both of sustained release properties of an antifoulant and coating film consumption properties are exhibited to thereby ensure long-term antifouling properties, and is relates to an antifouling coating capable of being markedly decreased in VOC content as compared with conventional antifouling coatings and to an antifouling method for a substrate.

The patent literature 1 aims at a bio-related UV curable clear film hydrophilic gel. In this formulation, a special curing method such as UV curing is necessary, so that the gel is of no practical use in the ship coating. Further, with regard to the clear film containing no antifoulant component, its antifouling effect against marine organisms is overwhelmingly insufficient. In the applications in ships, the coating film is exposed to a strong water flow, and besides, marine organisms such as barnacles bite into the film, so that film strength withstanding them is required. In the patent literature 1, however, any means to obtain such film strength and durability is not suggested. Accordingly, the cured film described in the patent literature 1 is of no practical use in the ship antifouling applications.

In the patent literature 2, an antifouling effect due to a conventional hydrolyzable group (triisopropylsilyl acrylate) is aimed, and this mechanism is the same as the antifouling mechanism of a conventional hydrolyzable antifouling coating. On the other hand, the present invention contains no hydrolyzable groups (triisopropylsilyl acrylate) and utilizes a coating film-forming method in which a polyfunctional acrylic ester and an amine are allowed to directly react with each other, thereby exhibiting good low-temperature curability. In the present invention, moreover, antifouling properties are exhibited based on sustained release of an antifoulant and coating film grindability by the hydrophilic coating film containing a polyether component introduced thereinto. This mechanism is an antifouling mechanism entirely different from that of a conventional hydrolyzable antifouling coating, and they differ from each other in technical viewpoints.

In the past, there has been never known a case of evaluation of an antifoulant composition, a film of the antifoulant composition being formed utilizing a direct reaction of a polyfunctional (meth)acrylic ester with an amine, in which a polyether component is incorporated into its resin skeleton to thereby form a hydrophilic film exhibiting long-term antifouling properties based on sustained release of an antifoulant component and coating film consumption properties, the antifoulant composition being able to accomplish marked decrease in VOC content, as is the case with the present invention.

Advantageous Effects of Invention

The present invention is a two-component antifouling coating composition comprising a first component containing a given amount of a tri- or higher functional (meth)acrylic ester as an essential component, a second component containing an amine, wherein any of the components contains an antifoulant. The components in which either or both of the polyfunctional (meth) acrylic ester and the amine have an ether structure are subjected to Michael addition reaction in the coating process through two-component mixing to perform film formation, and thus, a coating film imparted with hydrophilicity is formed. Since the polyether component is hydrophilic, the coating film surface is swollen when brought into contact with seawater, and the coating film is ground by a water flow to exhibit consumption properties. At the same time, an antifoulant component in the coating film is sustainably released into seawater. This enables the film to exhibit

excellent long-lasting consumption properties and long-term antifouling properties against marine organisms.

Further, the composition of the present inventionhas sufficient curability even at a low-temperature environmental temperature and is excellent also in the coating film strength. On this account, a special forcible drying method such as ignition drying or UV irradiation is unnecessary, and good drying properties are exhibited in the natural environmental temperature range from low temperature to ordinary temperature, so that the composition of the present invention is of practical use as a coating for ships. Furthermore, since the present invention uses a low-viscosity polyfunctional (meth) acrylic ester and a low-viscosity amine, the initial viscosity of a coating can be set low, and the VOC value can be markedly decreased to 400 g/L or less without impairing coating operability with a spray. Moreover, by using a low-viscosity substance such as benzyl alcohol or a reactive diluent in combination, an antifouling coating composition substantially containing no volatile component is available. By using a low-viscosity plasticizer such as tricresyl phosphate in combination, an antifouling coating composition containing no volatile component becomes also available.

Description of Embodiments

[Two-component antifouling coating composition]

<(Meth)acrylic ester (A)>

A (meth) acrylic ester is a substance having a chemical structure given by ester modification of acrylic acid or methacrylic acid and containing its acryloyl group or methacryloyl group ($\alpha$, $\beta$-unsaturated carbonyl group). In the present invention, a (meth)acrylic ester having or not having an ether linkage is used in combination with an ether structure of an amine compound described later.

The (meth) acrylic ester for use in the present invention has a chemical structure containing a polyfunctional group having 2 to 6 functional groups. Further, the antifouling coating composition has Michael addition reactivity to undergo conjugate addition reaction with carbanion such as amine or other nucleophiles.

Examples of bifunctional compounds having an ether structure among the above compounds include:

diethylene glycol diacrylate, tetraethylene glycol diacrylate, triethylene glycol diacrylate, tripropylene glycol diacrylate, dipropylene glycol diacrylate, alkoxylated hexanediol diacrylate, polyethylene glycol dimethacrylate, ethoxylated (3) bisphenol A diacrylate, ethoxylated (4) bisphenol A dimethacrylate and ethoxylated (4) bisphenol A diacrylate;

examples of trifunctional compounds include:

ethoxylated (9) trimethylolpropane triacrylate, ethoxylated (20) trimethylolpropane triacrylate, ethoxylated (6) trimethylolpropane triacrylate, propoxylated (6) trimethylolpropane triacrylate, propoxylated (3) glyceryl triacrylate and ethoxylated (15) trimethylolpropane triacrylate; and

examples of tetrafunctioanl compounds include:

ethoxylated (4) pentaerythritol tetraacrylate.

Typical examples of commercial products thereof include SR230 (diethylene glycol diacrylate, bifunctional), SR502 (ethoxylated (9) trimethylolpropane triacrylate, trifunctional) and SR494 (ethoxylated (4) pentaerythritol tetraacrylate, tetrafunctional)

(all available from Sartomer), and they have the following chemical structures.

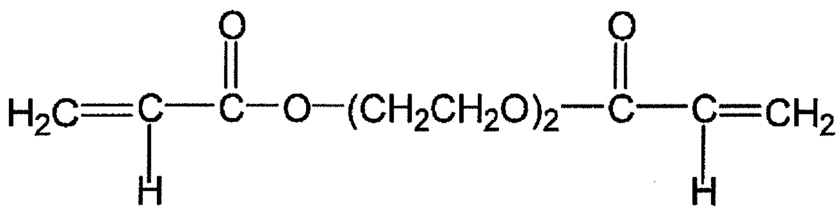

SR502: ethoxylated (9) trimethylolpropanetriacrylate, trifunctional

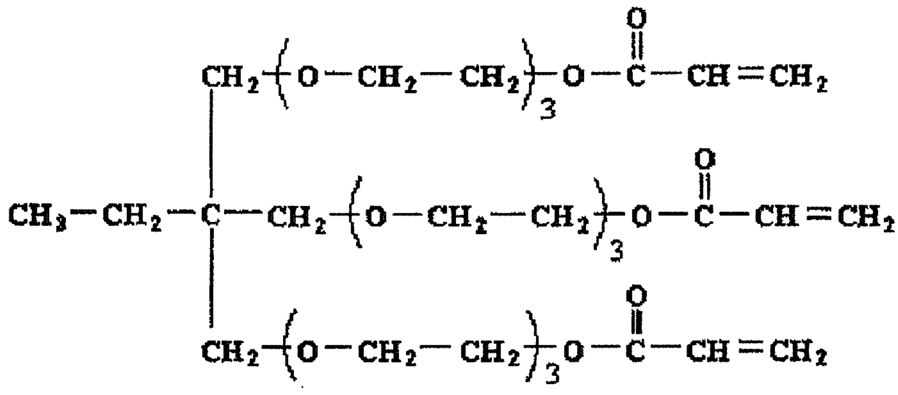

SR494: ethoxylated (4) pentaerythritol tetraacrylate, tetrafunctional

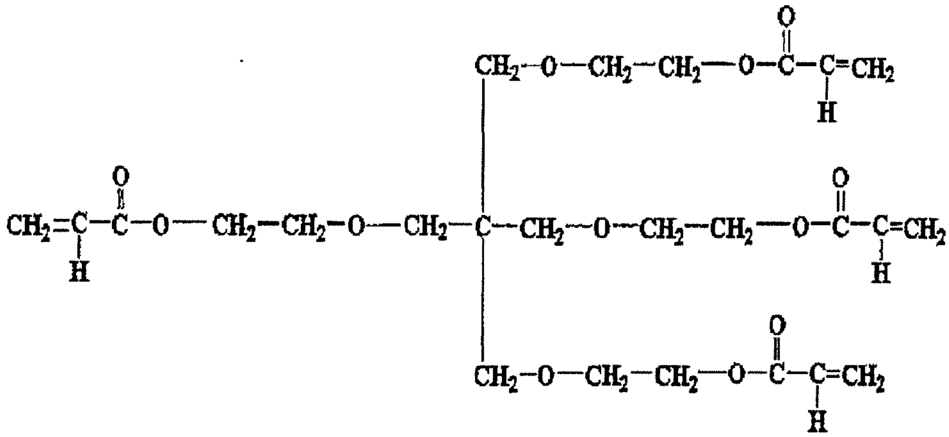

On the other hand, examples of bifunctional compounds having no ether structure include:

1,3-butylene glycol diacrylate, 1,4-butanediol diacrylate, 1,6-hexanediol diacrylate, neopentyl glycol diacrylate, cyclohexanedimethanol diacrylate, tricyclodecanedimethanol diacrylate, ethylene glycol dimethacrylate, dioxane glycol diacrylate, dipropylene glycol diacrylate, and dodecane diacrylate;
examples of trifunctional compounds include:

trimethylolpropane triacrylate, tris(2-hydroxyethyl)isocyanurate triacrylate and pentaerythritol triacrylate;
examples of tetrafunctioanl compounds include:

pentaerythritol tetraacrylate, ditrimethylolpropane tetraacrylate and tetraacrylate;
examples of pentafunctional compounds include dipentaerythritol pentaacrylate; and
examples of hexafunctional compounds include dipentaerythritol hexaacrylate.

Typical examples of commercial products thereof include SR212 (1,4-butanediol diacrylate, bifunctional), SR351S (trimethylolpropane triacrylate, trifunctional) and SR295 (pentaerythritol tetraacrylate, tetrafunctional) (all available from Sartomer), and they have the following chemical structures.

SR212: 1,4-butanediol diacrylate, bifunctional

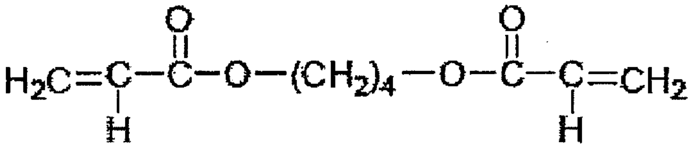

SR351S: trimethylolpropane triacrylate, trifunctional

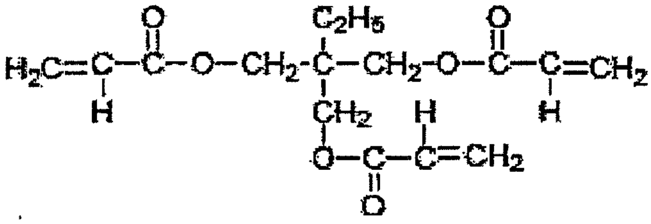

SR295: pentaerythritol tetraacrylate, tetrafunctional

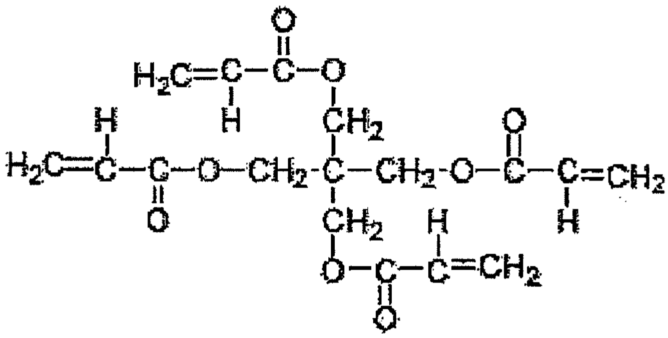

In the (meth)acrylic esters, monofunctional (meth)acrylic esters may be contained.

Of these polyfunctional (meth)acrylic esters, (meth)acrylic esters having 3 or more functional groups are excellent in reactivity, exhibit rapid increase in coating film curability in the low-temperature range and early exhibit practical strength.

On the other hand, bi- or lower functional (meth) acrylic esters have low reactivity, and particularly at a low temperature, the coating film-forming time is considerably long and the strength is not high, so that such (meth) acrylic esters are of no practical use. Moreover, if the coating film is immersed in seawater, problems such as blister and peeling may occur because of too low water resistance.

Therefore, it is practical and preferable that not less than 50% by weight, preferably not less than 70% by weight, of a tri- or higher functional (meth) acrylic ester is contained in a total weight of the polyfunctional (meth) acrylic ester (A). If not less than 50% by weight of abi- or lower functional (meth) acrylic ester is contained, drying properties and water resistance are sometimes deteriorated.

The (meth) acrylic esters (A) maybe used singly or in combination of two or more kinds.

<Amino group-containing compound (B)>

As the amino group-containing compound, a general amine-based curing agent having active hydrogen and capable of undergoing Michael addition reaction with a (meth) acrylic ester is employable, and any polyamine of an aliphatic amine-based curing agent, an aromatic amine-based curing agent and an alicyclic amine-based curing agent is also applicable.

As the compound having an ether structure among the above compounds, polyoxypropylene amine is a typical compound. Typical examples of commercial products thereof include Jeffamine D230 (bifunctional, Mn: 200), Jeffamine D400 (bifunctional, Mn: 400) and Jeffamine T403 (trifunctional, molecular weight Mn: 400) (all available from Huntsman

Corporation), and they have the following structure.

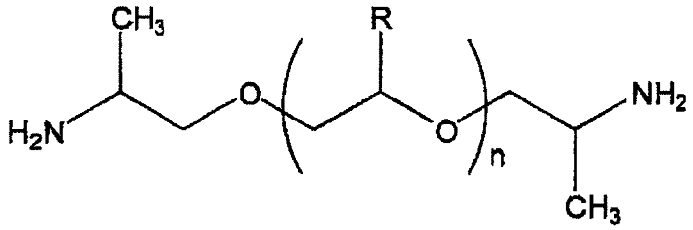

n is an integer of 1 to 30.
R is a hydrogen atom or a hydrocarbon group of 1 to 10 carbon atoms, and examples of the hydrocarbon groups include methyl group and ethyl group.

On the other hand, examples of bifunctional compounds having no ether structure include:

as aliphatic amines such as tetrakis(2-aminoethylaminomethyl)methane, 1,3-bis(2'-aminoethylamino)propane, triethylene-bis(trimethylene)hexamine, bis(3-aminoethyl)amine and bishexamethylenetriamine $[H_2N(CH_2)_nNH(CH_2)_nNH_2, n=6]$ ;
aliphatic amines containing aromatic ring such as o-xylylenediamine, m-xylylenediamine (MXDA), p-xylylenediamine and 2,4,6-tris(3-aminomethylphenylmethylaminomethyl)phenol; and
alicyclic amines such as 4-cyclohexanediamine, 4,4'-methylenebiscyclohexylamine, 4,4'-isopropylidenebiscyclohexylamine, norbornanediamine (NBDA, 2,5- and 2,6-bis(aminomethyl)-bicyclo[2,2,1]heptanes), bis(aminomethyl)cyclohexane, diaminodicyclohexylmethane, isophoronediamine (IPDA, 3-aminomethyl-3,5,5-trimethylcyclohexylamine), menthenediamine, an adduct of norbornanediamine with epoxy resin (NBDA adduct) and an adduct of isophoronediamine with epoxy resin (IPDA adduct).

Of the above amines, an adduct of isophoronediamine with epoxy resin (IPDAadduct) is preferable from the viewpoints of low viscosity, good drying properties, good weathering resistance, etc.
The amino group-containing compounds (B) may be used singly or in combination of two or more kinds.
In the present invention, either or both of the (meth) acrylic ester (A) and the amino group-containing compound (B) contain an ether structure. Since the ether structure is contained, the coating film becomes hydrophilic, moderately absorbs water and is swollen, whereby the antifoulant component easily comes out. Moreover, the swollen part is abraded by a water flow, whereby the coating film is consumed. Therefore, a sustained release effect of the antifoulant component and coating film consumption properties are exhibited.
In the present invention, a coating compositionof two-component type composed of the first component (first agent) containing the (meth)acrylic ester (A) and the second component (second agent) containing the amino group-containing compound (B) is constituted.
The content of the amino group-containing compound (B) in the composition is preferably 20 to 100 parts by weight, more preferably 25 to 80 parts by weight, still more preferably 30 to 60 parts by weight, with respect to 100 parts by weight of the (meth) acrylic ester (A).
If the content of the amino group-containing compound (B) is less than 20 parts by weight, drying properties of the coating film are extremely deteriorated, and strength and water resistance of the film are also poor. If the content thereof exceeds 100 parts by weight, a coating film containing an unreacted amine compound is formed, and water resistance of the film is lowered similarly to the above. Therefore, the above range is preferable.
The following antifoulant and other components may be contained in any one of the first component and the second component, but they may be contained in both. The amount of each of them is a total weight thereof in the first component and the second component based on the solid component of the antifouling coating composition. <Antifoulant (C)>
The antifouling coating composition of the present invention contains an antifoulant (C). The antifoulant (C) may be an antifoulant of either an organic type or an inorganic type, and employable are cuprous oxide, pyrithione metal salts such as copper pyrithione and zinc pyrithione, 4,5-dichloro-2-n-octyl-4-isothiazolin-3-one, 2-methylthio-4-t-butylamino-6-cyclopropylamino-S-triazine, 4-bromo-2-(4-chlorophenyl)-5-(trifluoromethyl)-1H-pyrrole-3-carb onitrile, medetomidine, etc.
In the antifouling coating composition of the present invention, it is desirable that the antifoulant (C) is used in an amount of 0.1 to 90% by weight, preferably 0.5 to 80% by weight, more preferably 1.0 to 60% by weight, based on the antifouling coating (solid component).

<Another resin component (D)>

In the present invention, as a resin for modification to control coating film consumption properties and to control coating film strength, one or two or more selected from a terpene phenol resin, a ketone resin, a petroleum resin, a cumarone resin, an epoxy resin, a hydrolyzable resin, and a rosin/rosin derivative compound may be blended. By using a resin for modification in combination, it becomes possible to control coating film consumption properties, coating film strength, coating film properties (e.g., crack resistance, adhesion to substrate) and surface smoothness.

It is desirable that the another resin component (D) is used in an amount of 0.1 to 60% by weight, preferably 0.5 to 50% by weight, more preferably 1. 0 to 40% by weight, in the antifouling coating (solid component).

The hydrolyzable resin is a resin having hydrolyzability in an alkaline atmosphere such as seawater, and has a stable degree of coating film consumption on a ship, an underwater structure or the like. The hydrolyzable resin is constituted of at least one hydrolyzable copolymer selected from the group consisting of the following copolymers:

- metal salt bond-containing copolymer (a1) (also referred to as "copolymer (a1)" hereinafter),
- crosslinked metal salt bond-containing copolymer (a2) (also referred to as "copolymer (a2)" hereinafter), and
- silyl ester copolymer (a3) (also referred to as "copolymer (a3)" hereinafter).

The hydrolyzable resin may be a copolymer satisfying requirements of both of the copolymer (a1) and the copolymer (a2), i.e., a copolymer containing both of a structure of a side-chain end metal salt bond found in the metal salt bond-containing copolymer (a1) and a structure of a crosslinked metal salt bond found in the copolymer (a2), or may be a copolymer satisfying one of the requirements. Instead of the copolymers (a1) and (a2) or in combination with the copolymers (a1) and (a2), the silyl ester copolymer (a3) may be used. The hydrolyzable resins may be used singly or in combination of two or more kinds.

• Metal salt bond-containing copolymer (a1)

The metal salt bond-containing copolymer (a1) is a metal salt bond-containing copolymer that is an acrylic resin or a polyester resin having a side-chain end group represented by the general formula (I). In the present invention, this structure is sometimes referred to as a "side-chain end metal salt bond".

$$-COO-M-O-COR^1 \qquad (I)$$

In the formula (I), M is zinc or copper, and $R^1$ is an organic group. In the copolymer (a1), usually, plural side-chain end groups each represented by the formula (I) are present, and plural $R^1$ may be the same as or different from one another, and plural M may be the same as or different from one another.

The organic group $R^1$ in the copolymer (a1) (and an organic group $R^1$ in the formula (IV) described later) is an organic acid residue formed from a monobasic acid, and is preferably a saturated or unsaturated aliphatic hydrocarbon group having 2 to 30 carbon atoms, a saturated or unsaturated alicyclic hydrocarbon group having 3 to 20 carbon atoms, an aromatic hydrocarbon group having 6 to 18 carbon atoms, or a substituted group of any of these groups; more preferably a saturated or unsaturated aliphatic hydrocarbon group having 10 to 20 carbon atoms, a saturated or unsaturated alicyclic hydrocarbon group having 3 to 20 carbon atoms, or a substituted group of any of these groups. An example of the substituted group is a hydroxyl group-substituted group. Of these, particularly preferable are organic acid residues formed from at least one monobasic acid selected from the group consisting of versatic acid, palmitic acid, stearic acid, oleic acid, linoleic acid, linolenic acid, (including structural isomers of these unsaturated aliphatic acids, e.g., isostearic acid; the same applies hereinafter.), abietic acid, neoabietic acid, pimaric acid, dehydroabietic acid, 12-hydroxystearic acid and naphthenic acid. The copolymer (a1) having such $R^1$ is easy to prepare, and the use of the copolymer (a1) having such $R^1$ can provide an antifouling coating film with much superior hydrolyzability and recoatability.

<<Acrylic resin type>>

An acrylic resin type polymer is one preferred embodiment of the copolymer (a1). The acrylic resin type polymer as the copolymer (a1) can be prepared by, for example, polymerization reaction using a metal salt bond-containing monomer represented by the general formula (IV), i.e., a monobasic acid metal (meth) acrylate (also referred to as a "monomer (a11)" hereinafter).

$$CH_2=C(R^2)-COO-M-O-COR^1 \qquad (IV)$$

In the formula (IV), M is zinc or copper, $R^1$ is an organic group, and $R^2$ is a hydrogen atom or a methyl group (the same

definitions as in the formula (I) and the formula (II)). The definition and preferred types of $R^1$ in the formula (IV) are the same as those described with regard to the organic group $R^1$ in the formula (I), with the proviso that $R^1$ in the formula (IV) is neither a vinyl group [$-CH=CH_2$] nor an isopropenyl group [$-C(CH_3)=CH_2$], in order to be distinguished from a monomer (a21) represented by the formula (II) capable of forming a crosslinked metal salt bond, which is described later.

The copolymer (a1) may be a polymer obtained through copolymerization reaction between two or more kinds of monomers (a11), or may be a polymer obtained through copolymerization reaction between one kind, or two or more kinds of monomers (a11), and one kind, or two or more kinds of other unsaturated monomers copolymerizable with the monomer (a11) (also referred to as a "monomer (a12) ", hereinafter), i.e., a copolymer containing a structural unit derived from the monomer (a11) and a structural unit derived from the monomer (a12).

The monomer (a12) is appropriately selectable from various compounds used as polymerizable unsaturated monomers for acrylic resins, and preferred examples thereof include monomers not containing a metal salt bond, such as alkyl (meth)acrylates, alkoxyalkyl (meth)acrylates and hydroxyalkyl (meth)acrylates. Of these, particularly preferred are methyl (meth)acrylate, ethyl (meth)acrylate, butyl (meth)acrylate, 2-methoxyethyl (meth)acrylate, 3-methoxybutyl (meth)acrylate, 2-hydroxyethyl (meth)acrylate, etc.

The acrylic resin type copolymer (a1) can be also prepared by, for example, a method comprising preparing an acrylic resin by using (meth)acrylic acid, an alkyl (meth)acrylate, an alkoxyalkyl (meth)acrylate, a hydroxyalkyl (meth)acrylate or the like, then performing a reaction which introduces a structure having an organic group ($R^1$) bonded to a carboxyl group through zinc or copper (M), wherein the carboxyl group is present at a side chain of the acrylic resin where a metal salt bond has not yet been formed, and thereby forming a side-chain end group represented by the formula (I).

<<Polyester resin type>>

The polyester resin type polymer as the copolymer (a1) has a side-chain end group represented by the formula (I) at an end of a polyester resin which is synthesized from a polybasic acid and a polyhydric alcohol as main raw materials and has an acid value of 50 to 200 mgKOH/g, preferably 80 to 170 mgKOH/g.

Examples of the acid components to form the polyester resin include monocarboxylic acids, such as benzoic acid and p-t-butyl benzoic acid; dicarboxylic acids and anhydrides thereof, such as terephthalic acid, isophthalic acid, phthalic anhydride, 1,4-naphthol acid, diphenic acid, 4,4'-oxybenzoic acid, 2,5-naphthalenedicarboxylic acid, tetrahydrophthalic acid, tetrahydrophthalic anhydride, norbornenedicarboxylic acid, oxalic acid, malonic acid, dimethylmalonic acid, succinic acid, glutaric acid, adipic acid, azelaic acid, sebacic acid and 1,3-cyclohexyldicarboxylic acid; and alkyl esters having about 1 to 4 carbon atoms of these dicarboxylic acids. These may be used singly or in combination of two or more kinds. In combination with these, tri- or higher functional carboxylic acids, such as trimellitic acid, trimellitic anhydride, pyromellitic acid and pyromellitic anhydride, may be used, and a slight amount of unsaturated dicarboxylic acids and esters thereof, such as maleic anhydride, maleic acid, itaconic anhydride, itaconic acid and fumaric acid, may be used.

Examples of the polyhydric alcohol components to form the polyester resin include ethylene glycol, diethylene glycol, triethylene glycol, polyethylene glycol, 1,2-propylene glycol, 1,3-propylene glycol, dipropylene glycol, polypropylene glycol, neopentyl glycol, 1,5-pentanediol, 1,6-hexanediol, 3-methyl-1,5-pentanediol, 2-methyl-1,3-propanediol, 2,2-diethyl-1,3-propanediol, 2-butyl-2-ethyl-1,3-propanediol, bisphenol A, and hydrogenated bisphenol A. These may be used singly or in combination of two or more kinds. In combination with these, tri- or higher functional alcohols, such as trimethylolethane, glycerol and pentaerythritol, may be used.

The polyester resin type copolymer (a1) can be prepared by, for example, a method comprising carrying out esterification reaction or ester exchange reaction by a known process such as a dissolution process using these various acid components and alcohol components, thereby preparing a polyester resin, and then performing a reaction which introduces a structure having an organic group ($R^1$) bonded to a carboxyl group through zinc or copper (M), wherein the carboxyl group is present at the end where a metal salt bond has not yet been formed, thereby forming a side-chain end group represented by the formula (I).

• Metal salt bond-containing copolymer (a2)

The metal salt bond-containing copolymer (a2) is a copolymer having a structural unit derived from a metal salt bond-containing monomer (a21) represented by the general formula (II) and a structural unit derived from other unsaturated monomer (a22) copolymerizable with the monomer (a21).

$$CH_2=C(R^2)-COO-M-O-CO-C(R^2)=CH_2 \qquad (II)$$

In the formula (II), M is zinc or copper, and $R^2$ is a hydrogen atom or a methyl group. In the copolymer (a2), usually,

plural structural units each derived from the monomer (a21) represented by the formula (II) are present, and plural $R^2$ may be the same as or different from one another, and plural M may be the same as or different from one another.

Examples of the metal salt bond-containing monomers (a21) include zinc diacrylate, zinc dimethacrylate, copper diacrylate, and copper dimethacrylate. The monomers (a21) may be used singly or in combination of two or more kinds.

The metal salt bond-containing monomer (a21) can be prepared by a known method, such as a method in which an inorganic metal compound (e.g., an oxide, a hydroxide, a chloride, etc. of zinc or copper), and (meth) acrylic acid or its ester compound are heated and stirred at not higher than the decomposition temperature of a metal salt in the presence of an alcohol-based organic solvent and water.

The structural unit derived from the metal salt bond-containing monomer (a21) has a structure represented by the general formula (V), and this structure is sometimes referred to as a "crosslinked metal salt bond" in the present invention.

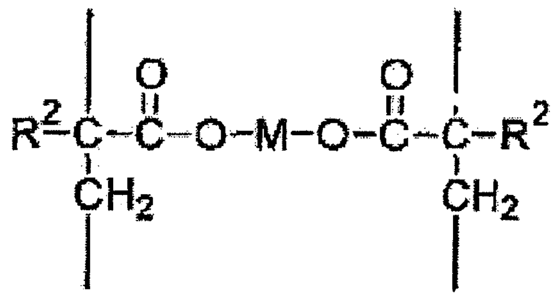

......(V)

The other unsaturated monomer (a22) copolymerizable with the metal salt bond-containing monomer (a21) is appropriately selectable from various compounds employed as polymerizable unsaturated monomers for acrylic resins, as is the case with the monomer (a12) in connection with the copolymer (a1). Preferred examples of the unsaturated monomers (a22) include alkyl (meth)acrylates, alkoxyalkyl (meth)acrylates and hydroxyalkyl (meth)acrylates. Of these, particularly preferred are methyl (meth)acrylate, ethyl (meth) acrylate, butyl (meth) acrylate, 2-methoxyethyl (meth) acrylate, 3-methoxybutyl (meth)acrylate, 2-hydroxyethyl (meth)acrylate, etc.

The monomer (a11) described above in connection with the copolymer (a1), i.e., the monobasic acid metal (meth)acrylate represented by the formula (IV), is also a monomer copolymerizable with the metal salt bond-containing monomer (a21), and thus corresponds to the unsaturated monomer (a22) employable for the preparation of the metal salt bond-containing copolymer (a2). Also with regard to the monobasic acid metal (meth) acrylate represented by the formula (IV) as the unsaturated monomer (a22), the definition and preferred embodiments of $R^1$ are the same as those described with regard to the organic group $R^1$ in the formula (I).

The unsaturated monomers (a22) may be used singly or in combination of two or more kinds.

In another preferable embodiment, the unsaturated monomer (a22) includes the monobasic acid metal (meth) acrylate represented by the formula (IV) and at least one unsaturated monomer selected from the group consisting of an alkyl (meth)acrylate, an alkoxyalkyl (meth)acrylate and a hydroxyalkyl (meth)acrylate.

Further examples of the unsaturated monomers (a22) include styrene and styrene derivatives; vinyl esters such as vinyl acetate and vinyl propionate; (meth) acrylamide and derivatives thereof; and (meth)acrylonitrile.

Also in the copolymer (a2), the content of zinc and/or copper attributed to the structure of the formula (II) is preferably 0.5 to 20% by weight, more preferably 1 to 19% by weight, of the copolymer, from the same viewpoint as described with regard to the copolymer (a1). The "content of zinc and/or copper" as used herein means a total content of zinc and copper if bothof zinc and copper are contained.

The content of zinc and/or copper can be adjusted to be within the above range by, for example, controlling the blending ratio of monomers employed for the preparation of the copolymer (a2). When the copolymer (a2) has both of a structure of the crosslinked metal salt bond and a structure of the side-chain end metal salt bond, it is preferable that the total content of zinc and/or copper attributed to each structure is controlled so as to be within the above range.

The number-average molecular weight (Mn: in terms of polystyrene) and the weight-average molecular weight (Mw: in terms of polystyrene) of the copolymer (a1) and the copolymer (a2) can be appropriately adjusted in view of viscosity and storage stability of the antifouling coating composition, elutionrateof the antifouling coatingfilm, etc., and Mn is usually about 1,000 to 100,000, preferably 1,000 to 50,000, and Mw is usually about 1,000 to 200,000, preferably 1,000 to 100,000.

• Silyl ester copolymer (a3)

The silyl ester copolymer (a3) is a copolymer having a structural unit (also referred to as a "silyl ester component

unit" hereinafter) derived from a monomer (a31) represented by the general formula (III) (also referred to as a "silyl ester monomer" hereinafter), and optionally having a structural unit derived from other unsaturated monomer (a32) copolymerizable with the monomer (a31).

$$R^7\text{-CH=C}(R^3)\text{-COO-Si}R^4R^5R^6 \qquad \text{(III)}$$

In the formula (III), $R^3$ is a hydrogen atom or a methyl group, $R^4$, $R^5$ and $R^6$ are each independently a hydrocarbon group, and $R^7$ is a hydrogen atom or $R^8$-O-CO- (wherein $R^8$ is an organic group or a silyl group represented by -Si$R^9R^{10}R^{11}$, wherein $R^9$, $R^{10}$ and $R^{11}$ are each independently a hydrocarbon group).

When the silyl ester monomer (a31) is a monomer wherein $R^7$ is a hydrogen atom (H), the monomer is represented by the general formula (IIIa).

$$CH_2\text{=C}(R^3)\text{-COO-Si}R^4R^5R^6 \qquad \text{(IIIA)}$$

In the formula (IIIa), $R^3$, $R^4$, $R^5$ and $R^6$ are the same as $R^3$, $R^4$, $R^5$ and $R^6$, respectively, in the formula (III).

The hydrocarbon group as each of the $R^4$, $R^5$ and $R^6$ is preferably an alkyl group having 1 to 10 carbon atoms, particularly 1 to 5 carbon atoms, and is more preferably an alkyl group, such as methyl, ethyl, propyl or isopropyl.

Examples of silyl ester monomer (a33) represented by the formula (IIIa) include trialkylsilyl (meth) acrylates, such as trimethylsilyl (meth)acrylate, triethylsilyl (meth)acrylate and triisopropylsilyl (meth)acrylate. Of these, triisopropylsilyl (meth)acrylate is preferable because excellent elution of a resin from the coating film, excellent long-lasting elution properties of a resin and excellent coating film properties (e.g., crack resistance) are provided.

When the silyl ester monomer (a31) is a monomer wherein $R^7$ is "$R^8$-O-CO-", the monomer is represented by the formula (IIIb).

$$R^8\text{-O-CO-CH=C}(R^3)\text{-COO-Si}R^4R^5R^6 \qquad \text{(IIIb)}$$

In the formula (IIIb), $R^3$, $R^4$, $R^5$, $R^6$ and $R^8$ are the same as $R^3$, $R^4$, $R^5$, $R^6$ and $R^8$, respectively, in the formula (III) or the formula (IIIa).

The organic group as the $R^8$ is preferably an alkyl group having 1 to 10 carbon atoms, particularly 1 to 5 carbon atoms, and is more preferably an alkyl group, such as methyl, ethyl, propyl or isopropyl. The hydrocarbon group as each of the $R^9$, $R^{10}$ and $R^{11}$ is preferably an alkyl group having 1 to 10 carbon atoms, particularly 1 to 5 carbon atoms, and is more preferably an alkyl group, such as methyl, ethyl, propyl or isopropyl.

An example of silyl ester monomer (a34) represented by the formula (IIIb) is a maleate (a compound represented by the formula (IIIb) wherein $R^3$ is H).

Examples of the other unsaturated monomer (a32) copolymerizable with the monomer (a31) (or with the monomer (a33) and/or the monomer (a34)) include the "other unsaturated monomers (a12)" and the "other unsaturated monomers (a22) " givenas examples of rawmaterial compounds of the copolymer (a1) and the copolymer (a2), respectively.

Preferred examples of the other unsaturated monomer (a32) include alkyl (meth)acrylates, alkoxyalkyl (meth)acrylates and hydroxyalkyl (meth)acrylates. Of these, particularly preferable are methyl (meth)acrylate, ethyl (meth)acrylate, butyl (meth)acrylate, 2-methoxyethyl (meth)acrylate, 3-methoxybutyl (meth)acrylate, 2-hydroxyethyl (meth)acrylate, etc.

The silyl ester monomer (a31) maybe used singly or in combination of two or more kinds. The other unsaturated monomer (a32) may be used singly or in combination of two or more kinds.

In the silyl ester copolymer (a3), the structural unit derived from the silyl ester monomer (a31) is contained usually in an amount of 10 to 100% by mol, preferably 10 to 90% by mol, and the structural unit derived from the "other unsaturated monomer (a32) " is contained in a residual amount, that is, usually in an amount of 0 to 90% by mol, preferably 10 to 90% by mol, in the copolymer (100% by mol of all constituent units). The contents of these structural units being within the above ranges are preferable because excellent viscosity of a resin in the coating film (e.g., crack resistance), excellent storage stability of the coating, excellent elution of a resin from the coating film, etc. are provided.

The number-average molecular weight Mn (in terms of polystyrene) of the silyl ester copolymer (a3) is usually 1,000 to 200,000, preferably 1,000 to 100,000. Mn being within the above range is preferable because excellent viscosity of a resin in the coating film (e.g., crack resistance), excellent storage stability of the coating, excellent elution of a resin from the coating film, etc. are provided.

When these hydrolyzable resins are used in combination, coating film consumption properties are ensured while maintaining a low volatile organic compounds (VOC) by virtue of synergistic effect with the hydrolyzable resins even if the amount of the polyether component is decreased, and therefore, an effect of exhibiting good antifouling properties with relatively low consumption of a coating film is obtained. The hydrolyzable resins maybe used singly or

in combination of two or more kinds.

The rosin and/or rosin derivative compound used in the antifouling coating composition of the present invention enhances elution of an antifoulant from the antifouling coating film and coating film consumption properties, and particularly enhances static antifouling properties. Examples of the rosin/rosin derivative compounds include rosins, such as gum rosin, wood rosin and tall oil rosin, and rosin derivatives, such as hydrogenated rosin and disproportionated rosin. When such a rosin/rosin derivative compound is used in combination with the hydrolyzable resin, an effect of particularly enhancing static antifouling properties is obtained.

<Other additives>

The antifouling coating composition of the present invention may contain at least one additive selected from the group consisting of an extender pigment (E), a pigment dispersing agent (F), a coloring agent (G), a dehydrating agent (H), a plasticizer (I), an anti-sagging agent (J), an anti-settling agent (K) and a solvent (L). These additives are described in detail hereinafter.

<Extender pigment (E)>

Examples of the extender pigments (E) include talc, silica, mica, clay, potash feldspar, calcium carbonate which is used also as an anti-settling agent, kaolin, alumina white, white carbon which is used also as a flatting agent, aluminum hydroxide, magnesium carbonate, barium carbonate and barium sulfate. Of these, an extender pigment selected from the group consisting of talc, silica, mica, clay, calcium carbonate, kaolin, barium sulfate and potash feldspar is preferable. The extender pigment is a pigment which has a low refractive index, and is transparent and does not hide the coated surface when mixed with oil or varnish. The antifouling coating composition of the present invention containing the extender pigment is preferable from the viewpoint of enhancement in coating film properties such as crack resistance.

It is desirable that the extender pigment (E) is used in an amount of 0.1 to 80% by weight, preferably 0.5 to 60% by weight, more preferably 1.0 to 50% by weight, in the antifouling coating (solid component).

<Pigment dispersing agent (F)>

As the pigment dispersing agent (F), any of hitherto known various organic and inorganic dispersing agents is employable. Examples of the organic pigment dispersing agents include aliphatic amines and organic acids ("Duomeen TDO" manufactured by LION Corporation, "Disperbyk 101" manufactured by BYK CHEMIE).

It is desirable that the pigment dispersing agent (F) is used in an amount of 0.1 to 30% by weight, preferably 0.1 to 20% by weight, more preferably 0.3 to 10% by weight, in the antifouling coating (solid component).

<Coloring agent (G)>

As the coloring agent, any of hitherto known various organic and inorganic pigments is employable. Examples of the organic pigments include carbon black, naphthol red and phthalocyanine blue. Examples of the inorganic pigments include red iron oxide, baryte powder, titanium white and yellow iron oxide. A dye and the like may be contained. The antifouling coating composition of the present invention containing the coloring agent is preferable because hue of an antifouling coating film obtained from the composition can be arbitrarily controlled.

It is desirable that the coloring agent (G) is used in an amount of 0.1 to 30% by weight, preferably 0 .1 to 20% by weight, more preferably 0.3 to 10% by weight, in the antifouling coating (solid component) .

<Dehydrating agent (H)>

As the dehydrating agent (H), hitherto known gypsum, ethyl silicate or the like can be used.

It is desirable that the dehydrating agent (H) is used in an amount of 0.1 to 30% by weight, preferably 0.3 to 20% by weight, more preferably 0.5 to 10% by weight, in the antifouling coating (solid component).

<Plasticizer (I)>

Examples of the plasticizers (I) include cholorinated paraffin, TCP (tricresyl phosphate), polyvinyl ethyl ether, dialkyl phthalate and benzyl alcohol. The antifouling coating composition according to the present embodiment, which contains the plasticizer (I), is preferable from the viewpoint of enhancement in crack resistance of a coating film (antifouling coating film) formed from the antifouling coating composition.

The chlorinated paraffin may be either straight-chain or branched, and may be either liquid or solid (powdery)

at room temperature. As the chlorinated paraffin, chlorinated paraffin usually having an average number of carbon atoms of 8 to 30, preferably 10 to 26, is desirably used, and chlorinated paraffin usually having a number-average molecular weight of 200 to 1200, preferably 300 to 1100, usually having a viscosity of not less than 1 (poise, 25°C), preferably not less than 1.2 (poise, 25°C), and usually having a specific gravity of 1.05 to 1.80/25°C, preferably 1.10 to 1.70/25°C, is desirably used. When chlorinated paraffin having such a number of carbon atoms is used, a coating film less suffering cracking (cracks) and peeling can be formed from the resulting antifouling coating composition. By using chlorinated paraffin having 8 or more carbon atoms, a cracking inhibitory effect tends to be obtained, and by using chlorinated paraffin having 30 or less carbon atoms, the surface of the resulting coating film is excellent in consumption properties (renewal properties), and the film is improved in antifouling properties. In usual, the chlorination ratio (chlorine content) of the chlorinated paraffin is preferably 35 to 75%, more preferably 35 to 65%. When chlorinated paraffin having such a chlorination ratio is used, a coating film less suffering cracking (cracks) and peeling can be formed from the resulting antifouling coating composition. Examples of such chlorinated paraffins include "Toyoparax 150" and "Toyoparax A-70" both manufactured by Tosoh Corporation. Of these plasticizers, chlorinated paraffin, TCP (tricresyl phosphate) and benzyl alcohol are preferable. These plasticizers can be used singly or in combination of two or more kinds.

It is desirable that the plasticizer (I) is used in an amount of 0.1 to 40% by weight, preferably 0.5 to 30% by weight, more preferably 1.0 to 20% by weight, in the antifouling coating (solid component).

<Anti-sagging agent (J) (also referred to as "anti-running agent")>

Examples of the anti-sagging agents (J) include amide wax, a hydrogenated castor oil wax-based anti-sagging agent, a polyamide wax-based anti-sagging agent, a mixture of these agents, and synthetic finely divided silica. Preferable are polyamide wax and synthetic finely divided silica. Examples of commercial products thereof include "Disparlon A603-20X" manufactured by Kusumoto Chemicals, Ltd. and "ASAT-250F" manufactured by Itoh Oil Chemicals Co., Ltd. The antifouling coating composition of the present invention containing the anti-sagging agent is preferable because anti-sagging properties, etc. in the coating process can be controlled. It is desirable that the anti-sagging agent (J) is used in an amount of 0.1 to 30% by weight, preferably 0.5 to 20% by weight, more preferably 1.0 to 10% by weight, based on the antifouling coating (solid component).

<Anti-settling agent (K)>

Examples of the anti-settling agents (K) include organic clay-based amine salts of Al, Ca or Zn, polyethylene wax and oxidized polyethylene-based wax, and preferable is oxidized polyethylene-based wax. An example of a commercial product of the
anti-settling agent is "Disparlon 4200-20" manufactured by Kusumoto Chemicals, Ltd. The antifouling coating composition of the present invention containing the anti-settling agent (K) is preferable because settling of solvent-insoluble matters during the storage period can be prevented, and stirrability can be enhanced. It is desirable that the anti-settling agent (K) is used in an amount of 0.1 to 30% by weight, preferably 0.5 to 20% by weight, more preferably 1.0 to 10% by weight, based on the antifouling coating (solid component).

<Solvent (L)>

The antifouling coating composition of the present invention may further contain a solvent (L). As the solvent, any of hitherto known solvents having a wide range of boiling points can be used, and specific examples thereof include aliphatic solvents, such as turpentine; aromatic solvents, such as toluene and xylene; alcohol solvents, such as isopropyl alcohol, n-butyl alcohol and isobutyl alcohol; ester solvents, such as ethyl acetate and butyl acetate; ketone solvents, such as methyl ethyl ketone, methyl isobutyl ketone and methyl amyl ketone; and ether or ether ester solvents, such as ethylene glycol monomethyl ether, ethylene glycol monobutyl ether, propylene glycol monomethyl ether and propylene glycol monomethyl ether acetate. Preferable are xylene, methyl isobutyl ketone and propylene glycol monomethyl ether. These solvents are used singly or in combination of two or more kinds.

The content of the volatile organic compounds (VOC) in the antifouling coating composition of the present invention can be 400 g/L or less, and is preferably 300 g/L. By adjusting the VOC content to 400 g/L or less, the burden on the environment and the influence on the human body can be reduced. This VOC content is a value measured under the measuring conditions described in the working examples.

The two-component antifouling coating composition of the present invention is obtained by preparing the first component containing the (meth)acrylic ester (A) and the second component containing the amino group-containing compound (B) separately, subjecting them to storage, transportation, or the like in different containers, and mixing them in a give ratio immediately before use. By mixing these components immediately before use and applying the mixture, Michael addition reaction of the (meth)acrylic ester (A) with the amino group-containing compound (B) proceeds during

the drying process to form an antifouling coating film. In the present invention, addition of a catalyst or UV irradiation is not always necessary.

In the case of not a composition of two-component type but a composition of one component type obtained from the raw materials used in the present invention (obtained by addition reaction performed in advance), gelation or solidification takes place in the coating production stage, and a coating having fluidity cannot be obtained, resulting in difficulty in coating.

By allowing a (meth)acrylic ester having no ether structure to undergo Michael addition reaction with an amino group-containing compound having an ether structure , or by allowing a (meth) acrylic ester having an ether structure to undergo Michael addition reaction with an amino group-containing compound having no ether structure, it is also possible to form a hydrophilic coating film in which an ether structure has been introduced. Further, a (meth) acrylic ester having an ether structure and an amino group-containing compound having an ether structure may be allowed to undergo Michael addition reaction with each other.

Of these systems, a system in which a (meth) acrylic ester having an ether structure and an amino group-containing compound having no ether structure are allowed to react with each other is more preferable because a coating film formed by the reaction has excellent water resistance to thereby stabilize long-term properties of the film.

The amount of the ether structure introduced into the (meth) acrylic ester and the amino group-containing compound greatly relates to water resistance and coating film strength. If the introduction amount is too large, water resistance of a dried coating film is markedly lowered to cause problems such as insufficient coating film strength, blister of a coating film, cracking of a coating film and peeling of a coating film. In the case of such a polyether structure as shown below, the introduction amount x is preferably 1 to 10, more preferably 1 to 5, still more preferably 1 to 3.

$$-\left(CH_2-CH_2-O\right)_x-$$

<Method for producing antifouling coating composition>

The antifouling coating composition according to the present embodiment can be produced by subj ecting the above components prepared in advance to mixing, stirring, etc. For mixing or stirring, hitherto known mixing or stirring devices, such as high-speed disperser, sand grind mill, basket mill, ball mill, three-roll mill, Ross mixer, planetary mixer and universal Shinagawa stirrer, may be used.

[Uses of antifouling coating composition]

The antifouling coating film according to the present embodiment is a film obtained by curing the antifouling coating composition according the present embodiment. The antifouling substrate according to the present embodiment is obtained by mixing the first component and the second component of the antifouling coating composition according to the present embodiment, coating or impregnating a substrate with the mixture, curing it and thereby forming an antifouling coating film.

Although the substrate is not specifically restricted, it is preferably any one of an underwater structure, a ship and fishing gear (fishing net). For example, if the antifouling coating composition is applied to surfaces of underwater structures such as water inlets and outlets in a thermal power or nuclear power plant, surfaces of sludge diffusion prevention films used in various marine civil engineering works such as coastal road, undersea tunnel, harbor facilities, canal and waterway, and surfaces of various shapedproducts such as ships and fishery materials (e.g., rope, fishing net, fishing gear, float, buoy) once to plural times, there are obtained ships, underwater structures or the like each having been coated with an antifouling coating film which is excellent in antifouling properties, is capable of exhibiting sustained release of an antifoulant component over a long period of time, has moderate flexibility even in thick coating and is excellent in crack resistance.

That is to say, the antifouling coating film obtained by applying the antifouling coating composition according to the present embodiment to each surface of various shaped products is excellent in antifouling performance. For example, it can continuously prevent adhesion of aquatic organisms, such as sea lettuce, barnacle, green laver, serpula, oyster and Bugula neritina, for a long period of time. Also when the material of a ship or the like is particularly FRP, steel, wood, aluminum alloy or the like, the antifouling coating film favorably adheres to the surface of the material. Further, by applying the antifouling coating composition according to the present embodiment to a surface of a marine structure, prevention of adhesion of marine organisms can be accomplished, and the function of the structure can be maintained for a long period of time. If the antifouling coating composition is applied to a fishing net, blockage of meshes of the fishing net can be prevented, and besides, there is little fear of environmental pollution.

The antifouling coating composition according to the present embodiment may be applied directly to a fishing net, or may be applied to a surface of a ship, an underwater structure or the like having been coated in advance with an undercoating such as an anti-corrosive agent or a primer. Moreover, a surface of a ship, particularly a FRP ship, an underwater structure or the like having been already coated with a conventional antifouling coating or the antifouling coating composition according to the present embodiment may be overcoated with the antifouling coating composition according to the present embodiment for repairing. The thickness of the antifouling coating film formed on the surface of a ship, an underwater structure or the like as above is not specifically restricted, but for example, it is about 30 to 250 μm/one coating.
The antifouling coating film according to the present embodiment, which is obtained as above, is a film obtained by curing the antifouling coating composition according to the present embodiment, and therefore, the film has little fear of environmental pollution and exhibits excellent long-term antifouling performance against a wide range of organisms adhering to ships and underwater structures.
According to the present embodiment, a two-component low-VOC hydrolyzable antifouling coating composition capable of forming an antifouling coating film which gives less burden on the environment, has excellent antifouling properties, is uniformly consumed at a certain rate over a long period of time, can maintain excellent antifouling performance for a long period of time, i.e., is excellent in long-term antifouling property-maintaining performance, and is preferable as an antifouling coating film for ocean-going ships can be provided, as described above. Moreover, an antifouling coating film, and a ship, an underwater structure, fishing gear or a fishing net having been coated with the antifouling coating film can be provided.

## Examples

Hereinafter, the present invention is further described with reference to the examples and the comparative examples, but it should be construed that the present invention is in no way limited to the following examples.

<u>Production of hydrolyzable resin:</u>

• Production of side-chain end metal salt bond-containing copolymer (a1)

[Production Example 1]

Into a four-neck flask equipped with a condenser, a thermometer, a dropping funnel and a stirrer, 30 parts by weight of propylene glycol monomethyl ether (PGM) and 40 parts by weight of xylene were introduced, and with stirring, they were heated to 100°C. Subsequently, from the dropping funnel, a mixture consisting of monomers and a polymerization initiator shown in Table 1 was dropped at a constant rate over a period of 3 hours. After the dropping was completed, 1 part by weight of t-butyl peroctoate and 10 parts by weight of xylene were dropped over a period of 2 hours, and after stirring for 2 hours, 20 parts by weight of xylene were added, to thereby obtain a reaction mixture containing a side-chain end metal salt bond-containing copolymer (a1).
The viscosity and the solid content (%), which were property values of the resulting copolymer (a1) or the reaction mixture containing the copolymer (a1), were evaluated. The results are set forth in Table 1.

[Table 1]

| Production of side-chain end metal salt bond copolymer (a1) | | |
|---|---|---|
| | | Production Example 1 |
| Production of side-chain end metal salt bond copolymer (a1) | | (a1) |
| Monobasic acid metal (meth)acrylate: monomer (a11) | Versatic acid zinc methacrylate | 35 |
| Other unsaturated monomer copolymerizable with monomer (a11): monomer (a12) | 2-Methoxyethyl acrylate<br>3-Methoxybutyl acrylate<br>Ethyl acrylate | 10<br>30<br>25 |
| Polymerization initiator | t-Butyl peroxide | 6 |

(continued)

| Production of side-chain end metal salt bond copolymer (a1) | | |
|---|---|---|
| | | Production Example 1 |
| Property value | Viscosity (mPa·s) | 1880 |
| | Solid content (wt%) | 45.7 |
| * The units of the values of the monomer (a11), the monomer (a12) and the polymerization initiator are each part(s) by weight. | | |

[Production Example 2]

Production of metal salt bond-containing monomer (a21)

Into a four-neck flask equipped with a condenser, a thermometer, a dropping funnel and a stirrer, 85.4 parts by weight of propylene glycol methyl ether (PGM) and 40.7 parts by weight of zinc oxide were introduced, and with stirring, they were heated to 75°C.

Subsequently, from the dropping funnel, a mixture consisting of 43.1 parts by weight of methacrylic acid (MAA), 36.1 parts by weight of acrylic acid (AA) and 5 parts by weight of water was dropped at a constant rate over a period of 3 hours. After the dropping was completed, the reaction solution turned into transparent from an opaque white state. After stirring for 2 hours, 36 parts by weight of propylene glycol methyl ether (PGM) were added, to thereby obtain a transparent metal salt bond-containing monomer solution (a21). The solid content in the mixture solution of the resulting metal salt bond-containing monomer solution (a21) was 44.8% by weight.

[Production Example 3]

Production of metal salt bond-containing copolymer (a2)

Into a four-neck flask equipped with a condenser, a thermometer, a dropping funnel and a stirrer, 15 parts by weight of propylene glycol methyl ether (PGM), 57 parts by weight of xylene and 4 parts by weight of ethyl acrylate were introduced, and with stirring, they were heated to 100°C.

Subsequently , from the dropping funnel, a transparent mixture consisting of 1 part by weight of methyl methacrylate (MMA), 70.2 parts by weight of ethyl acrylate (EA), 5.4 parts by weight of 2-methoxyethyl acrylate (2-MEA), 52 parts by weight of the metal salt bond-containing monomer solution (a21) obtained in Production Example 2, 10 parts by weight of xylene, 1 part by weight of a chain transfer agent ("Nofmer MSD", manufactured by Nippon Oil & Fats Co., Ltd.), 2.5 parts by weight of azobisisobutyronitrile (AIBN, manufactured by Japan Hydrazine Company Inc.) and 7 parts by weight of 2,2'-azobis(2-methylbutyronitrile) (AMBN) was dropped at a constant rate over a period of 6 hours. (Dropping step 1)

After the dropping was completed, 0.5 part by weight of t-butyl peroctoate (TBPO) and 7 parts by weight of xylene were dropped over a period of 30 minutes. After stirring for 1 hour and 30 minutes, 4.4 parts by weight of xylene were added, to thereby obtain a light yellow, transparent crosslinked metal salt bond-containing copolymer (a2). Property values of the resulting crosslinked metal salt bond-containing copolymer (a2) are set forth in Table 2.

[Table 2]

| Production of metal salt bond-containing copolymer (a2) | | |
|---|---|---|
| Component dropped in dropping step 1 (parts by weight) | | Production Example 3 (a2) |
| Metal salt bond-containing monomer (a21) | a21 (Production Example 2) | 52 |
| Copolymerization monomer | Methyl methacrylate<br>Ethyl acrylate<br>2-Methoxyethyl acrylate | 1<br>70.2<br>5.4 |
| Initiator | AIBN<br>AMBN | 2.5<br>7 |

(continued)

| Production of metal salt bond-containing copolymer (a2) | | |
|---|---|---|
| Component dropped in dropping step 1 (parts by weight) | | Production Example 3 (a2) |
| Chain transfer agent | Nofmer MSD | 1 |
| | Xylene | 10 |
| Property value | Viscosity (mPa·s)<br>Heating residue (wt%)<br>Molecular weight (Mn) | 2,120<br>45.6<br>5,200 |

[Production Example 4]

Production of silyl ester compound (a3)

Into a reaction vessel equipped with a stirrer, a reflux condenser, a thermometer, a nitrogen introducing pipe and a dropping funnel, 53 parts by weight of xylene were introduced, and with stirring xylene by the stirrer, heating was carried out at normal pressure in a nitrogen atmosphere until the temperature of xylene in the reaction vessel became 85°C. With keeping the temperature of xylene in the reaction vessel at 85°C, a monomer mixture consisting of 50 parts by weight of TIPSMA (triisopropylsilyl methacrylate), 30 parts by weight of MEMA (methoxyethyl methacrylate), 10 parts by weight of MMA (methyl methacrylate), 10 parts by weight of BA (butyl acrylate) and 1 part by weight of 2,2' -azobis (2-methylbutyronitrile) was added into the reaction vessel over a period of 2 hours by the use of the dropping funnel.

Subsequently, 0.5 parts by weight of t-butyl peroxyoctoate was added into the reaction vessel, and with keeping the liquid temperature in the reaction vessel at 85 °C, stirring was continued by the stirrer for 2 hours at normal pressure. The liquid temperature in the reaction vessel was raised to 110 °C from 85 °C, and heating was carried out for 1 hour. Thereafter, 14 parts by weight of xylene were added into the reaction vessel to lower the liquid temperature in the reaction vessel, and when the liquid temperature became 40 °C, stirring was stopped. Thus, a solution containing a silyl ester copolymer (a3) was prepared.

Property values of the resulting silyl ester copolymer (a3) are set forth in Table 3.

The copolymers (a1) to (a3) obtained in the above production examples were each used as another resin component.

[Table 3]

| Silyl ester copolymer (a3) | | |
|---|---|---|
| | | Production Example 4 a3 |
| Copolymerization monomer (parts by weight) | TIPSMA<br>MEMA<br>MMA<br>BA | 50<br>30<br>10<br>10 |
| Property value | Heating residue (wt%) | 59.9 |
| | Weight-average molecular weight Mw | 39,880 |
| | Viscosity (mPa·s) | 3,580 |

The property values of the side-chain end metal salt bond-containing copolymer (a1), the crosslinked metal salt bond-containing copolymer (a2) and the silyl ester copolymer (a3) were measured by the following methods.

(1) Content of heating residue in (co)polymersolution

In a constant temperature bath, 1.5 g ($X_1$ (g)) of a (co) polymer solution was kept for 3 hours under the conditions of 1 atm and 108 °C to remove a volatile component, whereby a heating residue (nonvolatile component) was obtained. Subsequently, the amount ($X_2$ (g)) of the heating residue (nonvolatile component) thus remaining was measured, and the content (%) of the heating residue in the (co) polymer solution was calculated according to the following formula.

$$\text{Content (\%) of heating residue} = X_2/X_1 \times 100$$

(2) Average molecular weight of (co)polymer

Average molecular weights (number-average molecular weight (Mn) and weight-average molecular weight (Mw)) of a (co)polymer were measuredusingGPC (gelpermeationchromatography) under the following conditions. The conditions are as follows.

GPC conditions

Device: "HLC-8120GPC" (manufactured by Tosoh Corporation)
Column: "SuperH2000+H4000" (manufactured by Tosoh Corporation, 6 mm (inner diameter), each 15 cm (length))
Eluent: tetrahydrofuran (THF)
Flow rate: 0.500 ml/min
Detector: RI
Column constant temperature bath temperature: 40°C
Standard substance: polystyrene
Sample preparation method: A small amount of calcium chloride was added to a (co) polymer solution to perform dehydration, and then a filter residue obtained by filtration through a membrane filter was used as a GPC measurement sample.

(3) Viscosity of (co)polymer solution

Viscosity (unit: mPa·s) of a (co)polymer solution at a liquid temperature of 25°C was measured using a B-type viscometer (manufactured by Tokyo Keiki Inc.).

Example 1

<Preparation of antifouling coating composition>

A first component of an antifouling coating composition was prepared in the following manner.

(First component)

In the first place, in a 1000 ml plastic container, solvent xylene (12.2 parts by weight), SR295 (20 parts by weight), TCP (1 part by weight), zinc oxide (30 parts by weight), TTK talc (12 parts by weight), red iron oxide No. 404 (1 part by weight), Novoperm Red F5RK (0.5 parts by weight), Disperbyk-101 (0.3 parts by weight), Zinc Omadine (7 parts by weight), Sea-Nine 211 (5 parts by weight), Disparlon A603-20X (1 part by weight) were blended as shown in Table 4-1, then 200 parts by weight of glass beads were added, and they were dispersed for 1 hour. A list of the raw materials is shown in Table 7.
The resulting dispersion was filtered through a 60-mesh filtering net, to thereby prepare a first component of an antifouling coating composition.

(Second component)

An amino group-containing compound having composition described in Table 4-1 was prepared as a second component.

<Property evaluation of antifouling coating composition>

The first component and the second component prepared above were mixed in a given ratio shown in Table 4-1, and an antifouling coating film was produced and evaluated.

Examples 2 to 27, Comparative Examples 1 to 17

Antifouling coating compositions were prepared in the same manner as in Example 1, except that the blending components of the first component containing (A) and the second component containing (B), another resin component,

and the blending amounts of them were changed as shown in Tables 4-1 and 4-2 (Examples) and Tables 5-1 and 5-2 (Comparative Examples).

Comparative Examples 18 to 23

Coatings of one-component composition were intended to be prepared in blending amounts shown in Table 6, but gelation took place
during the preparation of each of the coatings, so that a coating film could not be formed.

<Evaluation items>

(1) Weight measurement of volatile organic compound (VOC)

Using values of the coating specific gravity and the weight NV, the weight of VOC was calculated from the following formula.

$$\text{VOC (g/L)} = \text{coating specific gravity} \times 1000 \times (100 - \text{weight NV})/100$$

(2) Specific gravity

Specific gravity (coating specific gravity) was measured by measuring, at 25°C, the mass of an antifouling coating composition with which a specific gravity cup having an internal volume of 100 ml was filled.

(3) Heating residue (weight NV)

Into a flat-bottomed dish, 1 g of an antifouling coating composition was weighed, and the composition was uniformly spread using a wire of known mass and dried at 125 °C for one hour. Thereafter, the total mass of the residue and the wire was measured, and a heating residue (% by weight) was calculated.

(4) Viscosity measurement of antifouling coating composition

The temperature was adjusted to 23 °C, and the coating viscosity was measured using a RION viscometer (RION CO., LTD. VISCOTESTER VT-04F for high viscosity, No. 1 rotor).

(5) Low-temperature drying properties

A glass plate having a width of 25 mm, a length of 348 mm and a thickness of 2 mm was coated with an antifouling coating composition prepared in the example, by means of a film applicator in such a manner that the dried film thickness of the composition became 150 μm, and immediately thereafter, T2 (tack-free time) and T3 (curing time) were measured by means of a coating drying measuring equipment drying recorder (manufactured by Coating Tester Co., Ltd.) under the temperature conditions of 5 °C.

(6) Adhesion test (immersion in ordinary temperature seawater)

A sandblasted steel plate (150 mm × 70 mm × 1.6 mm) was coated with an epoxy coating (product of Chugoku Marine Paints, Ltd. , "Bannoh 500") and an epoxy binder coating (product of Chugoku Marine Paints, Ltd., "Bannoh 500N") in this order at a coating interval of 1 day in such a manner that the dried film thicknesses became 150 μm and 100 μm, respectively. Thereafter, the surface of the coating film formed from the epoxy binder coating was coated with an antifouling coating composition prepared in the example at a coating interval of 1 day in such a manner that the dried film thickness of the composition became 150 μm, to thereby prepare a test plate.
The test plate was dried at 23 °C for 7 days and immersed in ordinary temperature seawater. The coating film appearance was confirmed every month, and after the passage of 2 months, adhesion of the coating film was confirmed.
For the adhesion evaluation, a cross-cut test (4 mm × 4 mm/9 squares) was carried out, and the coating film residual ratio was evaluated based on four criteria shown in the following Table 8.

(7) Degree of coating film consumption of antifouling coating film

A rigid vinyl chloride plate of 50 mm × 50 mm × 1. 5 mm was coated with an antifouling coating composition prepared in the example, by the use of an applicator in such a manner that the dried film thickness became 150 μm, and the plate was dried at room temperature (about 20 °C) for 7 days, to thereby prepare a test plate.

This test plate was fixed to a side surface of a rotary drum placed in a constant temperature bath containing seawater of 25 °C and rotated at a peripheral velocity of 15 knots, and the cumulative consumption degree (decrease in film thickness) of the antifouling coating film was measured every month.

(8) Static antifouling property test of antifouling coating film

A sandblasted steel plate of 100 mm × 300 mm × 3.2 mm was coated with an epoxy coating (product of Chugoku Marine Paints, Ltd. , "Bannoh 500") and an epoxy binder coating (product of Chugoku Marine Paints, Ltd., "Bannoh 500N") in this order at a coating interval of 1 day in such a manner that the dried film thicknesses became 150 μm and 100 μm, respectively. Thereafter, the surface of the coating film formed from the epoxy binder coating was coated with an antifouling coating composition prepared in the example at a coating interval of 1 day in such a manner that the dried film thickness of the composition became 150 μm, to thereby prepare a test plate. The test plate was dried at 23 °C for 7 days and statically immersed in Nagasaki Bay of Nagasaki Prefecture, and the area of adhesion of aquatic organisms was measured by visual observation every month, and the static antifouling properties were evaluated based on the following evaluation criteria.

0: There is no adhesion of aquatic organisms.
0.5: The area of adhesion of aquatic organisms is more than 0% but not more than 10%.
1: The area of adhesion of aquatic organisms is more than 10% but not more than 20%.
2: The area of adhesion of aquatic organisms is more than 20% but not more than 30%.
3: The area of adhesion of aquatic organisms is more than 30% but not more than 40%.
4: The area of adhesion of aquatic organisms is more than 40% but not more than 50%.
5: The area of adhesion of aquatic organisms is more than 50%.

[Table 4-1]

| | | | Ex. 1 | Ex. 2 | Ex. 3 | Ex. 4 | Ex. 5 | Ex. 6 | Ex. 7 |
|---|---|---|---|---|---|---|---|---|---|
| First component | Ether structure-free (meth)acrylic ester | SR295 (pentaerythritol tetraacrylate, tetrafunctional) | 20 | | 20 | | | | |
| | | SR351 S (trimethylolpropane triacrylate, trifunctional) | | 20 | | | | | |
| | Ether structure-containing (meth) acrylic ester | SR502 (ethoxylated (9) trimethylolpropane triacrylate, trifunctional) | | | | 20 | | | |
| | | SR494 (ethoxylated (4) pentaerythritol tetraacrylate, tetrafunctional) | | | | | 20 | 18 | 18 |
| | | SR230 (ethylene glycol diacrylate, bifunctional) | | | | | | 2 | |
| | | SR508 (dipropylene glycol diacrylate, bifunctional) | | | | | | | 2 |
| | Another resin component | Laropal A-81 | 0 | 0 | 0 | 0 | 0 | 0 | 0 |
| | | Epikote 828 | 0 | 0 | 0 | 0 | 0 | 0 | 0 |
| | Plasticizer | TCP (tricresyl phosphate) | 1 | 1 | 1 | 1 | 1 | 1 | 1 |
| | | Benzyl alcohol | 0 | 0 | 0 | 0 | 0 | 0 | 0 |
| | Pigment component | Zinc oxide | 30 | 30 | 30 | 30 | 30 | 30 | 30 |
| | | TIK talc | 12 | 12 | 12 | 12 | 12 | 12 | 12 |
| | | Red iron oxide No. 404 | 1 | 1 | 1 | 1 | 1 | 1 | 1 |
| | | Novoperm Red F5RK | 0.5 | 0.5 | 0.5 | 0.5 | 0.5 | 0.5 | 0.5 |
| | Pigment dispersing agent | Disperbyk-101 | 0.3 | 0.3 | 0.3 | 0.3 | 0.3 | 0.3 | 0.3 |
| | Antifoulant component | Zinc Omadine | 7 | 7 | 7 | 7 | 7 | 7 | 7 |
| | | Sea-Nine 211 | 5 | 5 | 5 | 5 | 5 | 5 | 5 |
| | | ECONEA | 0 | 0 | 0 | 0 | 0 | 0 | 0 |
| | | Irgarol 1051 | 0 | 0 | 0 | 0 | 0 | 0 | 0 |
| | | Medetomidine | 0 | 0 | 0 | 0 | 0 | 0 | 0 |
| | | Copper Omadine | 0 | 0 | 0 | 0 | 0 | 0 | 0 |
| | | Cuprous oxide NC-803 | 0 | 0 | 0 | 0 | 0 | 0 | 0 |

(continued)

| | | | Ex. 1 | Ex. 2 | Ex. 3 | Ex. 4 | Ex. 5 | Ex. 6 | Ex. 7 |
|---|---|---|---|---|---|---|---|---|---|
| | Thixotropic agent | Disparlon A603-20X | 1 | 1 | 1 | 1 | 1 | 1 | 1 |
| | Solvent | Xylene | 12.2 | 12.2 | 12.2 | 12.2 | 12.2 | 12.2 | 12.2 |
| (Subtotal) | | | 90 | 90 | 90 | 90 | 90 | 90 | 90 |
| Second component | Polyether structure-containing amine | Jeffamine D-230 | 10 | 10 | | | | | |
| | | Jeffamine T-403 | | | 10 | | | | |
| | Polyether structure-free amine | Ancamine 2074 | 0 | 0 | 0 | 10 | 10 | 10 | 10 |
| (Subtotal) | | | 10 | 10 | 10 | 10 | 10 | 10 | 10 |
| [Total] | | | 100 | 100 | 100 | 100 | 100 | 100 | 100 |
| Property value | Specific gravity | | 1.578 | 1.578 | 1.578 | 1.578 | 1.578 | 1.578 | 1.578 |
| | Heating residue (wt%) | | 83.356 | 83.356 | 83.356 | 83.356 | 83.356 | 83.356 | 83.356 |
| | VOC (g/L) | | 261.2 | 261.2 | 261.2 | 261.2 | 261.2 | 261.2 | 261.2 |
| Coating viscosity (coating temperature 23 °C) | First component only | | 39ps | 36ps | 39ps | 35ps | 36ps | 35ps | 34ps |
| | Mixture of first component and second component | | 13ps | 12ps | 14ps | 11ps | 12ps | 12ps | 12ps |
| | Drying properties (drying recorder) 5°C drying | T2 (tack-free) | 16 hrs | 20 hrs | 15 hrs | 16 hrs | 19 hrs | 20 hrs | 20 hrs |
| | | T3 (curing) | 18 hrs | 22 hrs | 17 hrs | 18 hrs | 21 hrs | 23 hrs | 23 hrs |
| Adhesion test (immersion in | 1 month | | 0 | 0 | 0 | 0 | 0 | 0 | 0 |
| ordinary temperature seawater) | 2 months | | 0 | 0 | 0 | 0 | 0 | 0 | 0 |
| Degree of coating film consumption (25°C/15 knots) | 1 month | | 30.7 | 29.8 | 18.3 | 39.8 | 22.3 | 29.8 | 22.3 |
| | 2 months | | 40.5 | 45.6 | 27.8 | 53.5 | 34.5 | 41.5 | 30.9 |
| | 3 months | | 53.3 | 60.3 | 37.6 | 73.5 | 43.5 | 52.9 | 43.9 |
| | 4 months | | 73.3 | 77.8 | 48.7 | 99.6 | 60.3 | 69.8 | 65.9 |
| | 5 months | | 98.5 | 102.4 | 59.6 | 113.5 | 75.6 | 95.6 | 88.7 |
| | 6 months | | 118.7 | 125.4 | 71.8 | 143.5 | 88.9 | 115.7 | 105.8 |

(continued)

| | | | Ex. 1 | Ex. 2 | Ex. 3 | Ex. 4 | Ex. 5 | Ex. 6 | Ex. 7 |
|---|---|---|---|---|---|---|---|---|---|
| Static antifouling properties | 1 month | | 0 | 0 | 0 | 0 | 0 | 0 | 0 |
| | 2 months | | 0 | 0 | 0 | 0 | 0 | 0 | 0 |
| | 3 months | | 0 | 0 | 0 | 0 | 0 | 0 | 0 |
| | 4 months | | 0 | 0 | 0 | 0 | 0 | 0 | 0 |
| | 5 months | | 0 | 0 | 0.5 | 0 | 0 | 0 | 0 |
| | 6 months | | 0.5 | 0.5 | 0.5 | 0.5 | 0.5 | 0 | 0 |
| | | | Ex. 8 | Ex. 9 | Ex. 10 | Ex. 11 | Ex. 12 | Ex. 13 | Ex. 14 |
| First component | Ether structure-free (meth)acrylic ester | SR295 (pentaerythritol tetraacrylate, tetrafunctional) SR351 S (trimethylolpropane triacrylate, trifunctional) | | | | | | | |
| | Ether structure-containing (meth) acrylic ester | SR502 (ethoxylated (9) trimethylolpropane triacrylate, trifunctional)<br>SR494 (ethoxylated (4) pentaerythritol tetraacrylate, tetrafunctional)<br>SR230 (ethylene glycol diacrylate, bifunctional)<br>SR508 (dipropylene glycol diacrylate, bifunctional) | 18 | 14 | 22 | 19 | 29 | 14 | 18 |
| | Another resin component | Laropal A-81 | 0 | 6 | 0 | 0 | 0 | 6 | 0 |
| | | Epikote 828 | 3 | 0 | 0 | 0 | 8 | 0 | 3 |
| | Plasticizer | TCP (tricresyl phosphate) | 1 | 1 | 1 | 1 | 0 | 1 | 1 |
| | | Benzyl alcohol | 0 | 0 | 0 | 0 | 8 | 0 | 0 |
| | Pigment component | Zinc oxide | 30 | 30 | 30 | 30 | 12 | 30 | 30 |
| | | TTK talc | 12 | 12 | 12 | 12 | 8.5 | 12 | 12 |
| | | Red iron oxide No. 404 | 1 | 1 | 1 | 1 | 1 | 1 | 1 |
| | | Novoperm Red F5RK | 0.5 | 0.5 | 0.5 | 0.5 | 0.5 | 0.5 | 0.5 |

(continued)

| | | | Ex. 8 | Ex. 9 | Ex. 10 | Ex. 11 | Ex. 12 | Ex. 13 | Ex. 14 |
|---|---|---|---|---|---|---|---|---|---|
| | Pigment dispersing agent | Disperbyk-101 | 0.3 | 0.3 | 0.3 | 0.3 | 0 | 0.3 | 0.3 |
| | Antifoulant component | Zinc Omadine | 7 | 7 | 7 | 7 | 10 | 7 | 7 |
| | | Sea-Nine 211 | 0 | 0 | 5 | 5 | 0 | 5 | 4 |
| | | ECONEA | 0 | 0 | 0 | 0 | 0 | 0 | 0 |
| | | Irgarol 1051 | 0 | 0 | 0 | 0 | 0 | 0 | 0 |
| | | Medetomidine | 0 | 0 | 0 | 0 | 0 | 0 | 0 |
| | | Copper Omadine | 1.5 | 1.5 | 0 | 0 | 3 | 0 | 0 |
| | | Cuprous oxide NC-803 | 0 | 0 | 0 | 0 | 0 | 0 | 0 |
| | Thixotropic agent | A603-20X Disparlon A603-20X | 1 | 1 | 1 | 1 | 0 | 1 | 1 |
| | Solvent | Xylene | 15.7 | 15.7 | 12.2 | 12.2 | 0 | 12.2 | 12.2 |
| (Subtotal) | | | 91 | 90 | 92 | 89 | 80 | 90 | 90 |
| Second component | Polyether structure-containing amine | Jeffamine D-230 Jeffamine T-403 | | | | | | | |
| | Polyether structure-free amine | Ancamine 2074 | 10 | 10 | 8 | 11 | 20 | 10 | 10 |
| (Subtotal) | | | 10 | 10 | 8 | 11 | 20 | 10 | 10 |
| [Total] | | | 100 | 100 | 100 | 100 | 100 | 100 | 100 |
| Property value | Specific gravity | | 1.578 | 1.57 | 1.578 | 1.57 | 1.38 | 1.571 | 1.578 |
| | Heating residue (wt%) | | 83.356 | 83.356 | 83.356 | 83.356 | 100% | 83.356 | 83.356 |
| | VOC (g/L) | | 261.2 | 261.2 | 261.2 | 261.2 | 0 | 261.2 | 261.2 |
| Coating viscosity (coating temperature 23° C) | First component only | | 39ps | 41ps | 39ps | 41ps | 19ps | 36ps | 37ps |
| | Mixture of first component and second component | | 12ps | 13ps | 12ps | 13ps | 12ps | 12ps | 12ps |
| | Drying properties (drying recorder) 5°C drying | T2 (tack-free) | 16hrs | 20 hrs | 16hrs | 12 hrs | 15 hrs | 16 hrs | 17 hrs |
| | | T3 (curing) | 18hrs | 22 hrs | 18 hrs | 15 hrs | 20 hrs | 18 hrs | 20 hrs |

(continued)

| | | Ex. 8 | Ex. 9 | Ex. 10 | Ex. 11 | Ex. 12 | Ex. 13 | Ex. 14 |
|---|---|---|---|---|---|---|---|---|
| Adhesion test (immersion in | 1 month | 0 | 0 | 0 | 0 | 0 | 0 | 0 |
| ordinary temperature seawater) | 2 months | 0 | 0 | 0 | 0 | 0 | 0 | 0 |
| Degree of coating film consumption (25°C/15 knots) | 1 month | 14.3 | 17.9 | 15.7 | 20.3 | 9.7 | 18.9 | 15.6 |
| | 2 months | 21.6 | 28.7 | 22.3 | 29.8 | 16.8 | 29.8 | 28.9 |
| | 3 months | 28.7 | 36.8 | 31.4 | 38.9 | 23.4 | 40.3 | 38.7 |
| | 4 months | 37.6 | 47.6 | 42.3 | 46.7 | 31.5 | 55.5 | 49.8 |
| | 5 months | 47.6 | 59.6 | 49.8 | 52.3 | 39.8 | 68.9 | 60.7 |
| | 6 months | 56.7 | 72.4 | 57.6 | 61.5 | 51.3 | 80.4 | 72.3 |
| Static antifouling properties | 1 month | 0 | 0 | 0 | 0 | 0 | 0 | 0 |
| | 2 months | 0 | 0 | 0 | 0 | 0 | 0 | 0 |
| | 3 months | 0 | 0 | 0 | 0 | 0 | 0 | 0 |
| | 4 months | 0 | 0 | 0 | 0 | 0 | 0 | 0 |
| | 5 months | 0.5 | 0.5 | 0.5 | 0.5 | 0.5 | 0 | 0.5 |
| | 6 months | 0.5 | 0.5 | 0.5 | 0.5 | 0.5 | 0.5 | 0.5 |

[Table 4-2]

| | | | Ex. 15 | Ex.16 | Ex.17 | Ex.18 | Ex. 19 | Ex.20 | Ex. 21 |
|---|---|---|---|---|---|---|---|---|---|
| First component | Ether structure-tree (meth)acrylic ester | SR295 (pentaerythritol tetraacrylate, tetrafunctional) | | | | | | | |
| | Ether structure-containing (meth) acrylic ester | SR502 (ethoxylated (9) trimethylolpropane triacrylate, trifunctional) | | | | | | | |
| | | SR494 (ethoxylated (4) pentaerythritol tetraacrylate, tetrafunctional) | 18 | 18 | 18 | 15 | 14 | 13 | 15 |
| | Another resin component | Laropal A-81 | 0 | 0 | 0 | 0 | 0 | 0 | 0 |
| | | Epikote 828 | 3 | 3 | 3 | 0 | 1 | 2 | 0 |
| | | Side-chain end metal salt bond-containing copolymer (a1) | | | | | | | |
| | | Metal salt bond-containing copolymer (a2) | | | | | | | |
| | | Silyl ester copolymer (a3) | | | | | | | |
| | | WW rosin | | | | | | | |
| | Plasticizer | TCP (tricresyl phosphate) | 1 | 1 | 1 | 3 | 3 | 3 | 3 |
| | | Benzyl alcohol | 0 | 0 | 0 | 0 | 0 | 0 | 0 |
| | Pigment component | Zinc oxide | 30 | 30 | 30 | 9 | 9 | 9 | 9 |
| | | TTK talc | 12 | 12 | 12 | 4 | 4 | 4 | 4 |
| | | Red iron oxide No. 404 | 1 | 1 | 1 | 1 | 1 | 1 | 1 |
| | | Novoperm Red F5RK | 0.5 | 0.5 | 0.5 | 0.5 | 0.5 | 0.5 | 0.5 |
| | Pigment dispersing agent | Disperbyk-101 | 0.3 | 0.3 | 0.3 | 0.3 | 0.3 | 0.3 | 0.3 |
| | Antifoulant component | Zinc Omadine | 7 | 7 | 6 | 0 | 0 | 0 | 0 |
| | | Sea-Nine 211 | 0 | 0 | 0 | 0 | 0 | 0 | 5 |
| | | ECONEA | 4 | 0 | 0 | 0 | 0 | 0 | 0 |
| | | Irgarol 1051 | 0 | 4 | 0 | 0 | 0 | 0 | 0 |
| | | Medetomidine | 0 | 0 | 0.1 | 0 | 0 | 0 | 0 |
| | | Copper Omadine | 0 | 0 | 0 | 2 | 2 | 2 | 2 |
| | | Cuprous oxide NC-803 | 0 | 0 | 0 | 45 | 45 | 45 | 45 |

(continued)

| | | | Ex. 15 | Ex.16 | Ex.17 | Ex.18 | Ex. 19 | Ex.20 | Ex. 21 |
|---|---|---|---|---|---|---|---|---|---|
| | Thixotropic agent | Disparlon A603-20X | 1 | 1 | 1 | 1 | 1 | 1 | 1 |
| | Solvent | Xylene | 12.2 | 12.2 | 17.1 | 12.2 | 12.2 | 12.2 | 7.2 |
| (Subtotal) | | | 90 | 90 | 90 | 93 | 93 | 93 | 93 |
| | Polyether structure-containing amine | Jeffamine T-403 | | | | | | | |
| | Polyetherstructure-free amine | Ancamine 2074 | 10 | 10 | 10 | 7 | 7 | 7 | 7 |
| (Subtotal) | | | 10 | 10 | 10 | 7 | 7 | 7 | 7 |
| [Total] | | | 100 | 100 | 100 | 100 | 100 | 100 | 100 |
| | | | Ex. 15 | Ex. 16 | Ex. 17 | Ex. 18 | Ex. 19 | Ex. 20 | Ex. 21 |
| Property value | Specific gravity | | 1.578 | 1.578 | 1.578 | 1.998 | 1.997 | 1.997 | 2.016 |
| | Heating residue (wt%) | | 86.7 | 86.7 | 83.356 | 86.856 | 86.856 | 86.856 | 88.356 |
| | VOC (g/L) | | 214 | 214 | 261.2 | 261.558 | 261.427 | 261.427 | 233.675 |
| Coating viscosity (coating temperature 23°C) | First component only<br>Mixture of first component and second component | | 33ps<br>11ps | 31ps<br>10ps | 35ps<br>12ps | 28ps<br>11ps | 24ps<br>9ps | 29ps<br>13ps | 29ps<br>13ps |
| | Drying properties (drying recorder) 5°C drying | T2 (tack-free)<br>T3 (curing) | 16hrs<br>18hrs | 20 hrs<br>22hrs | 18 hrs<br>23 hrs | 14 hrs<br>17 hrs | 11 hrs<br>14 hrs | 13 hrs<br>17 hrs | 11 hrs<br>14 hrs |
| Adhesion test (immersion in | 1 month | | 0 | 0 | 0 | 0 | 0 | 0 | 0 |
| ordinary temperature seawater) | 2 months | | 0 | 0 | 0 | 0 | 0 | 0 | 0 |
| Degree of coating film consumption (25°C/15 knots) | 1 month<br>2 months<br>3 months<br>4 months<br>5 months<br>6 months | | 14.8<br>24.5<br>32.6<br>44.6<br>51.7<br>62.5 | 17.3<br>31.3<br>41.5<br>53.4<br>65.8<br>83.5 | 16.9<br>27.8<br>36.8<br>48.4<br>61.7<br>79.5 | 18.9<br>26.7<br>35.8<br>46.7<br>55.6<br>64.5 | 16.7<br>21.3<br>31.8<br>39.8<br>48.7<br>58.7 | 13.7<br>19.7<br>24.7<br>31.7<br>37.8<br>42.3 | 14.7<br>21.3<br>31.8<br>39.8<br>48.7<br>58.7 |

(continued)

| | | | Ex. 15 | Ex. 16 | Ex. 17 | Ex. 18 | Ex. 19 | Ex. 20 | Ex. 21 |
|---|---|---|---|---|---|---|---|---|---|
| Static antifouling properties | | 1 month | 0 | 0 | 0 | 0 | 0 | 0 | 0 |
| | | 2 months | 0 | 0 | 0 | 0 | 0 | 0 | 0 |
| | | 3 months | 0 | 0 | 0 | 0 | 0 | 0 | 0 |
| | | 4 months | 0 | 0 | 0 | 0 | 0 | 0 | 0 |
| | | 5 months | 0 | 0.5 | 0 | 0 | 0 | 0 | 0 |
| | | 6 months | 0 | 0.5 | 0.5 | 0 | 0.5 | 0.5 | 0 |
| | | | Ex. 22 | Ex. 23 | Ex. 24 | Ex.25 | Ex.26 | Ex. 27 | |
| First component | Ether structure-free (meth)acrylic ester | SR295 (pentaerythritol tetraacrylate, tetrafunctional) | | | 18 | 18 | 15 | 13 | |
| | Ether structure-containing (meth) acrylic ester | SR502 (ethoxylated (9) trimethylolpropane triacrylate, trifunctional) | | | | | | | |
| | | SR494 (ethoxylated (4) pentaerythritol tetraacrylate, tetrafunctional) | 24 | 15 | | | | | |
| | Another resin component | Laropal A-81 | 0 | 0 | 0 | 0 | 0 | 0 | |
| | | Epikote 828 | 0 | 0 | 0 | 0 | 0 | 0 | |
| | | Side-chain end metal salt bond-containing copolymer (a1) | | | 6.5 | | | | |
| | | Metal salt bond-containing copolymer (a2) | | | | 6.5 | | | |
| | | Silyl ester copolymer (a3) | | | | | 5.5 | 5.5 | |
| | | WW rosin | | | | | | 2 | |
| | Plasticizer | TCP (tricresyl phosphate) | 5 | 3 | 1 | 1 | 1 | 1 | |
| | | Benzyl alcohol | 0 | 0 | 0 | 0 | 0 | 0 | |
| | Pigment component | Zinc oxide | 8 | 9 | 30 | 30 | 6 | 6 | |
| | | TTK talc | 4 | 4 | 12 | 12 | 4 | 4 | |
| | | Red iron oxide No. 404 | 1 | 1 | 1 | 1 | 1 | 1 | |
| | | Novoperm Red F5RK | 0.5 | 0.5 | 0.5 | 0.5 | 0.5 | 0.5 | |

(continued)

| | | | Ex. 22 | Ex. 23 | Ex. 24 | Ex.25 | Ex.26 | Ex. 27 |
|---|---|---|---|---|---|---|---|---|
| | Pigment dispersing agent | Disperbyk-101 | 0 | 0 | 0.3 | 0.3 | 0.3 | 0.3 |
| | Antifoulant component | Zinc Omadine | 0 | 0 | 7 | 7 | 0 | 0 |
| | | Sea-Nine 211 | 0 | 5 | 0 | 0 | 0 | 0 |
| | | ECONEA | 0 | 0 | 3 | 3 | 0 | 0 |
| | | Irgarol 1051 | 0 | 0 | 0 | 0 | 0 | 0 |
| | | Medetomidine | 0 | 0 | 0 | 0 | 0 | 0 |
| | | Copper Omadine | 2 | 2 | 0 | 0 | 2 | 2 |
| | | Cuprous oxide NC-803 | 41.5 | 45 | 0 | 0 | 45 | 45 |
| | Thixotropic agent | Disparlon A603-20X | 1 | 1 | 1 | 1 | 1 | 1 |
| | Solvent | Xylene | | 7.2 | 9.7 | 9.7 | 11.7 | 11.7 |
| (Subtotal) | | | 87 | 92.7 | 90 | 90 | 93 | 93 |
| | Polyether structure-containing amine | Jeffamine T-403 | | | 3 | 3 | 2 | 2 |
| | Polyetherstructure-free amine | Ancamine 2074 | 13 | 7 | 7 | 7 | 5 | 5 |
| (Subtotal) | | | 13 | 7 | 10 | 10 | 7 | 7 |
| [Total] | | | 100 | 99.7 | 100 | 100 | 100 | 100 |
| | | | Ex. 22 | Ex. 23 | Ex. 24 | Ex. 25 | Ex. 26 | Ex. 27 |
| | Specific gravity | | 2.022 | 2.022 | 1.634 | 1.637 | 1.891 | 1.887 |
| Property value | Heating residue (wt%) | | 100 | 100 | 85.7 | 85.8 | 85.2 | 85.2 |
| | VOC (g/L) | | 0 | 0 | 229.7 | 229.9 | 279 | 278 |
| Coating viscosity (coating temperature 23°C) | First component only | | 29ps | 29ps | 25ps | 28ps | 39ps | 34ps |
| | Mixture of first component and second component | | 16 ps | 17ps | 10ps | 11ps | 15ps | 15ps |
| | Drying properties (drying recorder) 5°C drying | T2 (tack-free) | 16 hrs | 15 hrs | 18 hrs | 17 hrs | 10 hrs | 12 hrs |
| | | T3 (curing) | 22 hrs | 21 hrs | 23 hrs | 23 hrs | 12 hrs | 14 hrs |

(continued)

| | | Ex. 22 | Ex. 23 | Ex. 24 | Ex. 25 | Ex. 26 | Ex. 27 |
|---|---|---|---|---|---|---|---|
| Adhesion test (immersion in | 1 month | 0 | 0 | 0 | 0 | 0 | 0 |
| ordinary temperature seawater) | 2 months | 0 | 0 | 0 | 0 | 0 | 0 |
| Degree of coating film consumption (25°C/15 knots) | 1 month | 13.5 | 11.5 | 6.8 | 9.8 | 5.6 | 7.8 |
| | 2 months | 21.7 | 16.7 | 13.4 | 14.4 | 9.8 | 13.4 |
| | 3 months | 29.8 | 23.4 | 19.8 | 20.8 | 14.5 | 19.8 |
| | 4 months | 36.7 | 29.8 | 24.5 | 27.8 | 20.3 | 24.5 |
| | 5 months | 42.3 | 36.7 | 31.9 | 35.8 | 28.9 | 31.8 |
| | 6 months | 51.3 | 42.3 | 39.8 | 44.3 | 35.4 | 37.8 |
| Static antifouling properties | 1 month | 0 | 0 | 0 | 0 | 0 | 0 |
| | 2 months | 0 | 0 | 0 | 0 | 0 | 0 |
| | 3 months | 0 | 0 | 0 | 0 | 0 | 0 |
| | 4 months | 0 | 0 | 0 | 0 | 0 | 0 |
| | 5 months | 0 | 0 | 0 | 0.5 | 0.5 | 0 |
| | 6 months | 0 | 0.5 | 0.5 | 0.5 | 0.5 | 0.5 |

[Table 5-1]

| | | | Comp. Ex. 1 | Comp. Ex. 2 | Comp. Ex. 3 | Comp. Ex. 4 | Comp. Ex. 5 |
|---|---|---|---|---|---|---|---|
| First component | Ether structure-free (meth) acrylic ester | SR295 (pentaerythritol tetraacrylate, tetrafunctional) | 20 | | | | |
| | | SR351 S (trimethylolpropane triacrylate, trifunctional) | | 20 | | | |
| | Ether structure-containing (meth)acrylic ester | SR494 (ethoxylated (4) pentaerythritol tetraacrylate, tetrafunctional) | | | | 26 | 10 |
| | | SR230 (ethylene glycol diacrylate, bifunctional) | | | | | |
| | | SR508 (dipropylene glycol diacrylate, bifunctional) | | | | | |
| | Another resin component | Laropal A-81 | 0 | 0 | 0 | 0 | 0 |
| | | Epikote 828 | 0 | 0 | 20 | 0 | 0 |
| | Plasticizer | TCP (tricresyl phosphate) | 1 | 1 | 1 | 1 | 1 |
| | Pigment component | Zinc oxide | 30 | 30 | 30 | 30 | 30 |
| | | TTK talc | 21 | 21 | 12 | 12 | 12 |
| | | Red iron oxide No. 404 | 1 | 1 | 1 | 1 | 1 |
| | | Novoperm Red F5RK | 0.5 | 0.5 | 0.5 | 0.5 | 0.5 |
| | Dispersing agent | Disperbyk-101 | 0.3 | 0.3 | 0.3 | 0.3 | 0.3 |
| | Antifoulant component | Zinc Omadine | 0 | 0 | 7 | 7 | 7 |
| | | Sea-Nine 211 | 0 | 0 | 5 | 5 | 5 |
| | | ECONEA | 0 | 0 | 0 | 0 | 0 |
| | | Irgarol 1051 | 0 | 0 | 0 | 0 | 0 |
| | | Medetomidine | 0 | 0 | 0 | 0 | 0 |
| | | Copper Omadine | 0 | 0 | 0 | 0 | 0 |
| | | Cuprous oxide NC-803 | 0 | 0 | 0 | 0 | 0 |
| | Thixotropic agent | Disparlon A603-20X | 1 | 1 | 1 | 1 | 1 |

(continued)

| | | | Comp. Ex. 1 | Comp. Ex. 2 | Comp. Ex. 3 | Comp. Ex. 4 | Comp. Ex. 5 |
|---|---|---|---|---|---|---|---|
| | Solvent | Xylene | 15.2 | 15.2 | 12.2 | 12.2 | 12.2 |
| (Subtotal) | | | 90 | 90 | 90 | 96 | 80 |
| Second component | Polyether structure-containing amine | Jeffamine D-230 | 10 | 10 | 10 | | |
| | Polyether structure-free amine | Ancamine 2074 | | | | 4 | 20 |
| [Total] | | | 100 | 100 | 100 | 100 | 100 |
| Property value | Specific gravity | | 1.641 | 1.641 | 1.592 | 1.578 | 1.578 |
| | Heating residue (wt%) | | 83.856 | 83.856 | 83.356 | 83.356 | 83.356 |
| | VOC (g/L) | | 263.4 | 263.4 | 261.2 | 261.2 | 261.2 |
| Coating viscosity | First component only | | 43ps | 41ps | 53ps | 37ps | 64ps |
| | Mixture of first component and second component | | 14ps | 12ps | 18ps | 18ps | 19ps |
| | Drying properties (drying recorder) 5°C drying | T2 (tack-free) | 16 hrs | 20 hrs | 24 hrs or more | 24 hrs or more | 24 hrs or more |
| | | T3 (curing) | 18 hrs | 22 hrs | 24 hrs or more | 24 hrs or more | 24 hrs or more |
| Adhesion test (immersion in ordinary temperature seawater) | 1 month | | 0 | 0 | 0 | coating film breakage | coating film breakage |
| | 2 months | | 0 | 0 | 0 | 0 | 0 |
| Degree of coating film consumption (25°C/ 15 knots) | 1 month | | 29.8 | 22.3 | 8.7 | coating film breakage non-evaluable | coating film breakage non-evaluable |
| | 2 months | | 40.8 | 38.7 | 10.3 | | |
| | 3 months | | 55.6 | 53.4 | 11.5 | | |
| | 4 months | | 82.3 | 68.9 | 11.7 | | |
| | 5 months | | 113.4 | 85.6 | 12.1 | | |
| | 6 months | | 132.8 | 103.5 | 12.3 | | |

(continued)

| | | | Comp. Ex. 1 | Comp. Ex. 2 | Comp. Ex. 3 | Comp. Ex. 4 | Comp. Ex. 5 |
|---|---|---|---|---|---|---|---|
| Static antifouling properties | 1 month | | 0.5 | 0.5 | 1 | coating film breakage non-evaluable | coating film breakage non-evaluable |
| | 2 months | | 1 | 1 | 1 | | |
| | 3 months | | 3 | 2 | 1 | | |
| | 4 months | | 4 | 4 | 2 | | |
| | 5 months | | 5 | 5 | 4 | | |
| | 6 months | | 5 | 5 | 5 | | |
| | | | Comp. Ex. 6 | Comp. Ex. 7 | Comp. Ex. 8 | Comp. Ex. 9 | |
| First component | Ether structure-free (meth) acrylic ester | SR295 (pentaerythritol tetraacrylate, tetrafunctional) | | | | | |
| | | SR351 S (trimethylolpropane triacrylate, trifunctional) | | | | | |
| | Ether structure-containing (meth)acrylic ester | SR494 (ethoxylated (4) pentaerythritol tetraacrylate, tetrafunctional) | | | 8 | 8 | |
| | | SR230 (ethylene glycol diacrylate, bifunctional) | 20 | | | 12 | |
| | | SR508 (dipropylene glycol diacrylate, bifunctional) | | 20 | 12 | | |
| | Another resin component | Laropal A-81 | 0 | 0 | 0 | 0 | |
| | | Epikote 828 | 0 | 0 | 0 | 0 | |
| | Plasticizer | TCP (tricresyl phosphate) | 1 | 1 | 1 | 1 | |
| | Pigment component | Zinc oxide | 30 | 30 | 30 | 30 | |
| | | TTK talc | 12 | 12 | 12 | 12 | |
| | | Red iron oxide No. 404 | 1 | 1 | 1 | 1 | |
| | | Novoperm Red F5RK | 0.5 | 0.5 | 0.5 | 0.5 | |
| | Dispersing agent | Disperbyk-101 | 0.3 | 0.3 | 0.3 | 0.3 | |
| | Antifoulant component | Zinc Omadine | 7 | 7 | 7 | 7 | |
| | | Sea-Nine 211 | 5 | 5 | 5 | 5 | |

(continued)

| | | | Comp. Ex. 6 | Comp. Ex. 7 | Comp. Ex. 8 | Comp. Ex. 9 |
|---|---|---|---|---|---|---|
| | | ECONEA<br>Irgarol 1051<br>Medetomidine<br>Copper Omadine<br>Cuprous oxide NC-803 | 0<br>0<br>0<br>0<br>0 | 0<br>0<br>0<br>0<br>0 | 0<br>0<br>0<br>0<br>0 | 0<br>0<br>0<br>0<br>0 |
| | Thixotropic agent | Disparlon A603-20X | 1 | 1 | 1 | 1 |
| | Solvent | Xylene | 12.2 | 12.2 | 12.2 | 12.2 |
| (Subtotal) | | | 90 | 90 | 90 | 90 |
| Second component | Polyether structure-containing amine | Jeffamine D-230 | | | | |
| | Polyether structure-free amine | Ancamine 2074 | 10 | 10 | 10 | 10 |
| [Total] | | | 100 | 100 | 100 | 100 |
| Property value | Specific gravity | | 1.592 | 1.622 | 1.622 | 1.622 |
| | Heating residue (wt%) | | 83.356 | 83.356 | 83.356 | 83.356 |
| | VOC (g/L) | | 261.2 | 261.2 | 261.2 | 261.2 |
| Coating viscosity | First component only | | 34ps | 37ps | 36ps | 35ps |
| | Mixture of first component and second component | | 14ps | 18ps | 17ps | 15ps |
| | Drying properties (drying recorder) 5°C drying | T2 (tack-free)<br>T3 (curing) | 24 hrs or more | 24 hrs or more | 24 hrs or more | 24 hrs or more |

(continued)

| | | Comp. Ex. 6 | Comp. Ex. 7 | Comp. Ex. 8 | Comp. Ex. 9 |
|---|---|---|---|---|---|
| Adhesion test (immersion in ordinary temperature seawater) | 1 month | coating film breakage | coating film breakage | coating film breakage | coating film breakage |
| | 2 months | | | | |
| Degree of coating film consumption (25°C/ 15 knots) | 1 month<br>2 months<br>3 months<br>4 month<br>5 months<br>6 months | coating film breakage non-evaluable | coating film breakage non-evaluable | coating film breakage non-evaluable | coating film breakage non-evaluable |
| Static antifouling properties | 1 month<br>2 months<br>3 months<br>4 months<br>5 months<br>6 months | coating film breakage non-evaluable | coating film breakage non-evaluable | coating film breakage non-evaluable | coating film breakage non-evaluable |

[Table 5-2]

| | | | Comp. Ex. 10 | Comp. Ex. 11 | Comp. Ex. 12 | Comp. Ex. 13 |
|---|---|---|---|---|---|---|
| First component | Ether structure-tree (meth)acrylic ester Another resin component | SR295 (pentaerythritol tetraacrylate, tetrafunctional) | 20 | 20 | 20 | 20 |
| | | SR351S (trimethylolpropane triacrylate, trifunctional) | | | | |
| | | Laropal A-81 | 0 | 0 | 0 | 0 |
| | | Epikote 828 | 0 | 0 | 0 | 0 |
| | Plasticizer | TCP (tricresyl phosphate) | 1 | 1 | 1 | 1 |
| | Pigment component | Zinc oxide | 30 | 30 | 30 | 30 |
| | | TTK talc | 12 | 12 | 12 | 12 |
| | | Red iron oxide No. 404 | 1 | 1 | 1 | 1 |
| | | Novoperm Red F5RK | 0.5 | 0.5 | 0.5 | 0.5 |
| | Dispersing agent | Disperbyk-101 | 0.3 | 0.3 | 0.3 | 0.3 |
| | Antifoulant component | Zinc Omadine | 7 | 7 | 7 | 7 |
| | | Sea-Nine 211 | 5 | 5 | 5 | 5 |
| | | ECONEA | 0 | 0 | 0 | 0 |
| | | Irgarol 1051 | 0 | 0 | 0 | 0 |
| | | Medetomidine | 0 | 0 | 0 | 0 |
| | | Copper Omadine | 0 | 0 | 0 | 0 |
| | | Cuprous oxide NC-803 | 0 | 0 | 0 | 0 |
| | Thixotropic agent | Disparlon A603-20X | 1 | 1 | 1 | 1 |
| | Solvent | Xylene | 12.2 | 12.2 | 12.2 | 12.2 |
| (Subtotal) | | | 90 | 90 | 90 | 90 |
| Second component | Polyether structure-containing amine | Jeffamine D-230 | | | | |
| | Polyether structure-tree amine | Ancamine 2074 | 10 | | | |
| | | Luckamide V6-221 | | 10 | | |
| | | Luckamide TD-966 | | | 10 | |
| | | CardoliteNX-4918 | | | | 10 |
| (Subtotal) | | | 10 | 10 | 10 | 10 |
| [Total] | | | 100 | 100 | 100 | 100 |
| Property value | Specific gravity | 1.592 | 1.622 | 1.573 | 1.587 | |
| | Heating residue (wt%) | 83.356 | 83.356 | 79.356 | 83.3 | |
| | VOC (g/L) | 261.2 | 261.2 | 323.3 | 261.2 | |
| Coating viscosity | First component only | 37ps | 37ps | 37ps | 37ps | |
| | Mixture of first component and second component | 13ps | 18ps | 22ps | 21ps | |
| | Drying properties (drying recorder) 5°C drying T2 (tack-free) | 16 hrs | 20 hrs | 16 hrs | 20hrs | |

(continued)

| | | | Comp. Ex. 10 | Comp. Ex. 11 | Comp. Ex. 12 | Comp. Ex. 13 |
|---|---|---|---|---|---|---|
| | T3 (curing) | 18 hrs | 22 hrs | 18 hrs | 22 hrs | |
| Adhesion test (immersion in ordinary temperature seawater) | 1 month | 0 | 0 | 0 | 0 | |
| | 2 months | 0 | 0 | 0 | 0 | |
| Degree of coating film consumption (25°C/ 15 knots) | 1 month | 4.3 | 5.6 | 5.1 | 6.7 | |
| | 2 months | 4.3 | 5.7 | 5.3 | 6.7 | |
| | 3 months | 4.5 | 5.6 | 5.3 | 6.7 | |
| | 4 months | 4.3 | 5.8 | 5.2 | 6.9 | |
| | 5 months | 4.3 | 5.7 | 5.5 | 7 | |
| | 6 months | 4.5 | 5.7 | 5.5 | 7 | |
| Static antifouling properties | 1 month | 1 | 1 | 1 | 1 | |
| | 2 months | 1 | 1 | 1 | 2 | |
| | 3 months | 2 | 3 | 2 | 5 | |
| | 4 months | 4 | 5 | 5 | 5 | |
| | 5 months | 5 | 5 | 5 | 5 | |
| | 6 months | 5 | 5 | 5 | 5 | |

(continued)

| | | | Comp. Ex. 14 | Comp. Ex. 15 | Comp. Ex. 16 | Comp. Ex. 17 |
|---|---|---|---|---|---|---|
| First component | Ether structure-free (meth)acrylic ester | SR295 (pentaerythritol tetraacrylate, tetrafunctional) | 20 | 18 | 18 | 18 |
| | | SR351S (trimethylolpropane triacrylate, trifunctional) | | | | |
| | Another resin component | Laropal A-81 | | | | |
| | | Epikote 828 | 0<br>0 | 0<br>0 | 0<br>0 | 0<br>0 |
| | Plasticizer | TCP (tricresyl phosphate) | 1 | 1 | 1 | 1 |
| | Pigment component | Zinc oxide | 30 | 5 | 5 | 5 |
| | | TTK talc | 12 | 4 | 4 | 4 |
| | | Red iron oxide No. 404 | 1 | 1 | 1 | 1 |
| | | Novoperm Red F5RK | 0.5 | 0.5 | 0.5 | 0.5 |
| | Dispersing agent | Disperbyk-101 | 0.3 | 0.3 | 0.3 | 0.3 |
| | Antifoulant component | Zinc Omadine | 7 | 0 | 0 | 0 |
| | | Sea-Nine 211 | 0 | 0 | 0 | 0 |
| | | ECONEA | 5 | 0 | 0 | 0 |
| | | Irgarol 1051 | 0 | 0 | 0 | 0 |
| | | Medetomidine | 0 | 0 | 0 | 0 |
| | | Copper Omadine | 0 | 2 | 2 | 2 |
| | | Cuprous oxide NC-803 | 0 | 45 | 45 | 45 |
| | Thixotropic agent | Disparlon A603-20X | 1 | 1 | 1 | 1 |
| | Solvent | Xylene | 12.2 | 12.2 | 12.2 | 12.2 |
| (Subtotal) | | | 90 | 90 | 90 | 90 |
| Second component | Polyether structure-containing amine | Jeffamine D-230 | | | | |
| | Polyether structure-free amine | Ancamine 2074 | 10 | 10 | | |
| | | Luckamide V6-221 | | | 10 | |
| | | Luckamide TD-966 | | | | |
| | | Cardolite NX-4918 | | | | 10 |
| (Subtotal) | | | 10 | 10 | 10 | 10 |
| [Total] | | | 100 | 100 | 100 | 100 |
| | | | Comp. Ex. 14 | Comp. Ex. 15 | Comp. Ex. 16 | Comp. Ex. 17 |
| Property value | Specific gravity | | 1.625 | 1.879 | 1.921 | 1.853 |
| | Heating residue (wt%) | | 86.7 | 86.856 | 86.856 | 86.856 |
| | VOC(g/L) | | 214 | 246.374 | 243.7 | 243.7 |
| Coating viscosity | First component only | | 33ps | 23ps | 23ps | 23ps |
| | Mixture of first component and second component | | 14ps | 11ps | 18ps | 17ps |

(continued)

| | | | Comp. Ex. 14 | Comp. Ex. 15 | Comp. Ex. 16 | Comp. Ex. 17 |
|---|---|---|---|---|---|---|
| | Drying properties (drying recorder) 5°C drying | T2 (tack-free) | 16 hrs | 20 hrs | 16 hrs | 20 hrs |
| | | T3 (curing) | 18 hrs | 22 hrs | 18 hrs | 22 hrs |
| Adhesion test (immersion in ordinary temperature seawater) | 1 month | | 0 | 0 | 0 | 0 |
| | 2 months | | 0 | 0 | 0 | 0 |
| Degree of coating film consumption (25°C/ 15 knots) | 1 month | | 5.4 | 3.2 | 7.5 | 5.4 |
| | 2 months | | 5.7 | 3.3 | 7.7 | 6.1 |
| | 3 months | | 5.7 | 3.3 | 7.8 | 6.3 |
| | 4 months | | 5.7 | 3.4 | 7.8 | 6.3 |
| | 5 months | | 5.7 | 3.3 | 7.9 | 6.3 |
| | 6 months | | 5.7 | 3.4 | 7.8 | 6.3 |
| Static antifouling properties | 1 month | | 1 | 1 | 1 | 1 |
| | 2 months | | 2 | 2 | 2 | 2 |
| | 3 months | | 5 | 4 | 5 | 5 |
| | 4 months | | 5 | 5 | 5 | 5 |
| | 5 months | | 5 | 5 | 5 | 5 |
| | 6 months | | 5 | 5 | 5 | 5 |

[Table 6]

| | | | Comp. Ex. 18 | Comp. Ex. 19 | Comp. Ex. 20 | Comp. Ex. 21 | Comp. Ex. 22 | Comp. Ex. 23 |
|---|---|---|---|---|---|---|---|---|
| | Ether structure-tree (meth)acrylic ester | SR295 (pentaerythritol tetraacrylate, tetrafunctional) | 20 | | 20 | | | |
| | | SR351 S (trimethylolpropane triacrylate, trifunctional) | | 20 | | | | |
| | Ether structure-containing (meth)acrylic ester | SR502 (ethoxylated (9) trimethylolpropane triacrylate, trifunctional) | | | | 20 | | |
| | | SR494 (ethoxylated (4) pentaerythritol tetraacrylate, tetrafunctional) | | | | | 20 | 18 |
| | Polyether | Jeffamine D-230 | 10 | 10 | | | | |

(continued)

| | | | Comp. Ex. 18 | Comp. Ex. 19 | Comp. Ex. 20 | Comp. Ex. 21 | Comp. Ex. 22 | Comp. Ex. 23 |
|---|---|---|---|---|---|---|---|---|
| One-component composition | structure-containing amine | Jeffamine T-403 | | | 10 | | | |
| | Polyether structure-free amine | Ancamine 2074 | 0 | 0 | 0 | 10 | 10 | 10 |
| | Another resin component | Laropal A-81 | 0 | 0 | 0 | 0 | 0 | 0 |
| | | Epikote 828 | 0 | 0 | 0 | 0 | 0 | 3 |
| | | Epodil 759 | 0 | 0 | 0 | 0 | 0 | 0 |
| | Plasticizer | TCP (tricresyl phosphate) | 1 | 1 | 1 | 1 | 1 | 1 |
| | | Benzyl alcohol | 0 | 0 | 0 | 0 | 0 | 0 |
| | Pigment component | Zinc oxide | 30 | 30 | 30 | 30 | 30 | 30 |
| | | TTK talc | 12 | 12 | 12 | 12 | 12 | 12 |
| | | Red iron oxide No. 404 | 1 | 1 | 1 | 1 | 1 | 1 |
| | | Novoperm Red F5RK | 0.5 | 0.5 | 0.5 | 0.5 | 0.5 | 0.5 |
| | Pigment dispersing agent | Disperbyk-101 | 0.3 | 0.3 | 0.3 | 0.3 | 0.3 | 0.3 |
| | Antifoulant component | Zinc Omadine | 7 | 7 | 7 | 7 | 7 | 7 |
| | | Sea-Nine 211 | 5 | 5 | 5 | 5 | 5 | 0 |
| | | ECONEA | 0 | 0 | 0 | 0 | 0 | 0 |
| | | Irgarol 1051 | 0 | 0 | 0 | 0 | 0 | 0 |
| | | Medetomidine | 0 | 0 | 0 | 0 | 0 | 0 |
| | | Copper Omadine | 0 | 0 | 0 | 0 | 0 | 1.5 |
| | | Cuprous oxide NC-803 | 0 | 0 | 0 | 0 | 0 | 0 |
| | Thixotropic agent | Disparlon A603-20X | 1 | 1 | 1 | 1 | 1 | 1 |
| | Solvent | Xylene | 12.2 | 12.2 | 12.2 | 12.2 | 12.2 | 15.7 |
| [Total] | | | 100 | 100 | 100 | 100 | 100 | 101 |
| Property value | | Any of these is non-evaluable because gelation occurs in the coating preparation stage. | | | | | | |

[Table 7]

| Main raw materials used | | | |
|---|---|---|---|
| Trade name | Manufacturer | Type | Solid content |
| SR295 | Sartomer | pentaerythritol tetraacrylate (tetrafunctional) | 100 |
| SR351S | Sartomer | trimethylolpropane triacrylate (trifunctional) | 100 |
| SR502 | Sartomer | ethoxylated (9) trimethylolpropane triacrylate (trifunctional) | 100 |

(continued)

| Main raw materials used | | | |
|---|---|---|---|
| Trade name | Manufacturer | Type | Solid content |
| SR494 | Sartomer | ethoxylated (4) pentaerythritol tetraacrylate (tetrafunctional) | 100 |
| SR230 | Sartomer | ethylene glycol diacrylate (bifunctional) | 100 |
| SR508 | Sartomer | dipropylene glycol diacrylate (bifunctional) | 100 |
| Jeffamine D 230 | Huntsman | polyether-containing liquid polyether amine (diamine) | 100 |
| Jeffamine T403 | Huntsman | polyether-containing liquid polyether amine (triamine) | 100 |
| Luckamide V6-221 | DIC | MXDA (m-xylenediamine) Mannich modified polyamine | 100 |
| Luckamide TD-966 | DIC | diethylenetriamine modified aliphatic polyamine | 60 |
| Ancamine 2074 | Air Products | isophoronediamine modified alicyclic liquid polyamine | 100 |
| Cardolite NX4918 | Cardolite | phenalkamine | 80 |
| Laropal | BASF | ketone resin | 100 |
| Epikote 828 | Yuka Shell Epoxy | bisphenol A liquid epoxy resin | 100 |
| Epodil 759 | Air Products | monofunctional liquid epoxy reactive diluent | 100 |
| Benzyl alcohol | Shell | liquid plasticizer | |
| WW rosin | | rosin | 100 |
| Trade name | Manufacturer | Type | Solid content |
| TTK talc | Fukuoka Talc | extender pigment | 100 |
| Zinc oxide | Kyushu Hakusui | extender pigment | 100 |
| Novoperm Red F5RK | Clariant North America | organic red pigment | 100 |
| Zinc Omadine | Arch Chemicals | organic antifoulant | 100 |
| Copper Omadine | Arch Chemicals | organic antifoulant | 100 |
| Red iron oxide 404 | Toda Kogyo | color pigment | 100 |
| Disperbyk-101 | BYK-Chemie | pigment dispersing agent | 52 |
| TCP (Tricresyl phosphate) | Kyowa Hakko Kogyo | liquid plasticizer | 100 |
| Sea-Nine 211 | Rohm and Haas | 4,5-dichloro-2-n-octyl-4-isothiazolin-3-one | 30 |
| Irgarol 1051 | Ciba | 2-methylthio-4-t-butylamino-6-cyclopropylamino-s-triazine | 100 |
| ECONEA | Janssen | 2-(p-chlorophenyl)-3-cyano-4-bromo-5-trifluoromethylpyrrol | 100 |
| Medetomidine | i-Tech | organic antifoulant | 100 |
| Cuprous oxide NC-803 | NC Tech | inorganic antifoulant | 100 |
| Disparlon 603-20X | Kusumoto Chemicals | polyamide thixotropic agent | 20 |

[Table 8]

| Evaluation point (RN) | 0 | 1 | 2 | 3 |
|---|---|---|---|---|
| | 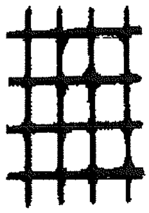 | 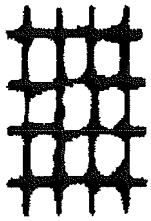 | 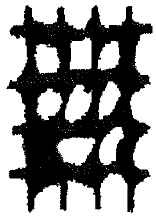 | Peeling area 50% or more |

## Claims

**1.** A two-component antifouling coating composition, comprising:

a first component comprising a (meth)acrylic ester (A);
a second component comprising an amino group-containing compound (B); and
an antifoulant (C) in either the first component or the second component, wherein
either or both of the (meth)acrylic ester (A) and the amino group-containing compound (B) have an ether structure;
not less than 50% by weight of a tri- or higher functional (meth) acrylic ester is contained in a total weight of the (meth) acrylic ester (A); and
the amino group-containing compound (B) is 20 to 100 parts by weight with respect to 100 parts by weight of the (meth) acrylic ester (A) .

**2.** The two-component antifouling coating composition according to claim 1, wherein the antifoulant (C) comprises one or two or more selected from cuprous oxide, a pyrithione metal salt, 4,5-dichloro-2-n-octyl-4-isothiazolin-3-one, 2-methylthio-4-t-butylamino-6-cyclopropylamino-S-triazine, 4-bromo-2-(4-chlorophenyl)-5-(trifluoromethyl)-1H-pyrrole-3-carb onitrile, and medetomidine.

**3.** The two-component antifouling coating composition according to claim 1 or 2, further comprising, as another resin component (D), one or two or more selected from a terpene phenol, a ketone resin, a petroleum resin, a cumarone resin, an epoxy resin, a hydrolyzable resin, and a rosin/rosin derivative compound.

**4.** The two-component antifouling coating composition according to any one of claims 1 to 3, further comprising an extender pigment (E).

**5.** The two-component antifouling coating composition according to any one of claims 1 to 4, further comprising a pigment dispersing agent (F).

**6.** The two-component antifouling coating composition according to any one of claims 1 to 5, further comprising a coloring agent (G).

**7.** The two-component antifouling coating composition according to any one of claims 1 to 6, further comprising a dehydrating agent (H).

**8.** The two-component antifouling coating composition according to any one of claims 1 to 7, further comprising a plasticizer (I) .

**9.** The two-component antifouling coating composition according to any one of claims 1 to 8, having a content of volatile organic compounds of 400 g/L or less.

**10.** An antifouling coating film, obtained by curing the two-component antifouling coating composition according to any one of claims 1 to 9.

**11.** An antifouling substrate, obtained by: coating or impregnating a substrate with the two-component antifouling coating composition according to any one of claims 1 to 9; and then curing the composition.

12. The antifouling substrate according to claim 11, wherein the substrate is an underwater structure, a ship, or fishing gear.

13. A method for producing an antifouling substrate, comprising steps of: coating or impregnating a substrate with the antifouling coating composition according to any one of claims 1 to 9; and curing the composition, with which the substrate has been coated or impregnated.

**Patentansprüche**

1. Zweikomponentige Antifouling-Beschichtungszusammensetzung, umfassend:

   eine erste Komponente, umfassend einen (Meth)acrylester (A);
   eine zweite Komponente, umfassend eine Aminogruppen-haltige Verbindung (B); und
   ein Antifoulingmittel (C) entweder in der ersten Komponente oder der zweiten Komponente, worin
   eines oder beides aus dem (Meth)acrylester (A) und der Aminogruppen-haltigen Verbindung (B) eine Etherstruktur aufweist,
   nicht weniger als 50 Gewichts-% eines dreifach oder höher funktionalisierten (Meth)acrylesters im Gesamtgewicht des (Meth)acrylesters (A) enthalten ist; und
   die Aminogruppen-haltige Verbindung (B) in Bezug auf 100 Gewichtsteile des (Meth)acrylesters (A) 20 bis 100 Gewichtsteile beträgt.

2. Zweikomponentige Antifouling-Beschichtungszusammensetzung gemäß Anspruch 1, worin das Antifoulingmittel (C) eines oder zwei oder mehrere umfasst, ausgewählt aus Kupferoxid, einem Pyrithion-Metallsalz, 4,5-Dichlor-2-n-octyl-4-isothiazolin-3-on, 2-Methylthio-4-t-butylamino-6-cyclopropylamino-S-triazin, 4-Brom-2-(4-chlorphenyl)-5-(trifluormethyl)-1H-pyrrol-3-carbonitril und Medetomidin.

3. Zweikomponentige Antifouling-Beschichtungszusammensetzung gemäß Anspruch 1 oder 2, ferner umfassend, als weitere Harzkomponente (D), eines oder zwei oder mehrere ausgewählt aus einem Terpenphenol, einem Ketonharz, einem Petroleumharz, einem Cumaronharz, einem Epoxyharz, einem hydrolisierbaren Harz und einer Rosin-/Rosin-Derivatverbindung.

4. Zweikomponentige Antifouling-Beschichtungszusammensetzung gemäß mindestens einem der Ansprüche 1 bis 3, ferner umfassend ein Extenderpigment (E).

5. Zweikomponentige Antifouling-Beschichtungszusammensetzung gemäß mindestens einem der Ansprüche 1 bis 4, ferner umfassend ein Pigmentdispergiermittel (F).

6. Zweikomponentige Antifouling-Beschichtungszusammensetzung gemäß mindestens einem der Ansprüche 1 bis 5, ferner umfassend ein Färbemittel (G).

7. Zweikomponentige Antifouling-Beschichtungszusammensetzung gemäß mindestens einem der Ansprüche 1 bis 6, ferner umfassend ein Dehydriermittel (H).

8. Zweikomponentige Antifouling-Beschichtungszusammensetzung gemäß mindestens einem der Ansprüche 1 bis 7, ferner umfassend einen Weichmacher (I).

9. Zweikomponentige Antifouling-Beschichtungszusammensetzung gemäß mindestens einem der Ansprüche 1 bis 8, die einen Gehalt an flüchtigen organischen Verbindungen von 400 g/L oder weniger aufweist.

10. Antifouling-Beschichtungsfilm, erhalten durch Härten der zweikomponentigen Antifouling-Beschichtungszusammensetzung gemäß mindestens einem der Ansprüche 1 bis 9.

11. Antifouling-Substrat, erhalten durch: Beschichten oder Imprägnieren eines Substrats mit der zweikomponentigen Antifouling-Beschichtungszusammensetzung gemäß mindestens einem der Ansprüche 1 bis 9; und anschließendes Härten der Zusammensetzung.

12. Antifouling-Substrat gemäß Anspruch 11, worin das Substrat eine Unterwasserstruktur, ein Schiff oder Fischereiausrüstung ist.

**13.** Verfahren zur Herstellung einer zweikomponentigen Antifouling-Beschichtungszusammensetzung, umfassend die Schritte: Beschichten oder Imprägnieren eines Substrats mit der Antifouling-Beschichtungszusammensetzung gemäß mindestens einem der Ansprüche 1 bis 9; und Härten der Zusammensetzung, mit der das Substrat beschichtet oder imprägniert wurde.

## Revendications

**1.** Composition de revêtement antisalissure à deux composants, comprenant :

un premier composant comprenant un ester (méth)acrylique (A) ;
un second composant comprenant un composé contenant un groupe amino (B) ; et
un agent antisalissure (C) dans le premier composant ou le second composant, dans laquelle
l'un ou l'autre ou les deux parmi l'ester (méth)acrylique (A) et le composé contenant un groupe amino (B) ont une structure d'éther ;
pas moins de 50 % en poids d'un ester (méth)acrylique tri-fonctionnel ou plus sont contenus dans un poids total de l'ester (méth)acrylique (A) ; et
le composé contenant un groupe amino (B) est de 20 à 100 parties en poids par rapport à 100 parties en poids de l'ester (méth)acrylique (A).

**2.** Composition de revêtement antisalissure à deux composants selon la revendication 1, dans laquelle l'agent antisalissure (C) comprend un ou deux ou plus de deux sélectionnés parmi l'oxyde cuivreux, un sel métallique de pyrithione, la 4,5-dichloro-2-n-octyl-4-isothiazolin-3-one, la 2-méthylthio-4-t-butylamino-6-cyclopropylamino-S-triazine, la 4-bromo-2-(4-chlorophényl)-5-(trifluorométhyl)-1H-pyrrole-3-carbonitrile, et la médétomidine.

**3.** Composition de revêtement antisalissure à deux composants selon la revendication 1 ou 2, comprenant en outre, comme autre composant de résine (D), un ou deux ou plus de deux sélectionnés parmi un terpène phénol, une résine de cétone, une résine de pétrole, une résine de cumarone, une résine époxy, une résine hydrolysable, et une colophane/un composé de dérivé de colophane.

**4.** Composition de revêtement antisalissure à deux composants selon l'une quelconque des revendications 1 à 3, comprenant en outre un pigment de charge (E).

**5.** Composition de revêtement antisalissure à deux composants selon l'une quelconque des revendications 1 à 4, comprenant en outre un agent de dispersion de pigment (F).

**6.** Composition de revêtement antisalissure à deux composants selon l'une quelconque des revendications 1 à 5, comprenant en outre un agent colorant (G).

**7.** Composition de revêtement antisalissure à deux composants selon l'une quelconque des revendications 1 à 6, comprenant en outre un agent de déshydratation (H).

**8.** Composition de revêtement antisalissure à deux composants selon l'une quelconque des revendications 1 à 7, comprenant en outre un plastifiant (I).

**9.** Composition de revêtement antisalissure à deux composants selon l'une quelconque des revendications 1 à 8, présentant une teneur en composés organiques volatiles de 400 g/l ou moins.

**10.** Film de revêtement antisalissure, obtenu par le durcissement de la composition de revêtement antisalissure à deux composants selon l'une quelconque des revendications 1 à 9.

**11.** Substrat antisalissure, obtenu par : le revêtement ou l'imprégnation d'un substrat avec la composition de revêtement antisalissure à deux composants selon l'une quelconque des revendications 1 à 9 ; et ensuite le durcissement de la composition.

**12.** Substrat antisalissure selon la revendication 11, dans lequel le substrat est une structure sous-marine, un navire,

ou un engin de pêche.

**13.** Procédé pour produire un substrat antisalissure, comprenant les étapes suivantes : le revêtement ou l'imprégnation d'un substrat avec la composition de revêtement antisalissure selon l'une quelconque des revendications 1 à 9 ; et le durcissement de la composition, avec laquelle le substrat a été revêtu ou imprégné.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012521472 A
- JP 2010235792 A
- JP 4506537 A